# EUROPEAN PATENT APPLICATION

(11) **EP 4 472 248 A1**
(43) Date of publication of application: **04.12.2024**
(21) Application number: 23778012.7
(22) Date of filing: 23.03.2023
(51) Int. Cl.: H04W 4/06

(54) **MULTICAST/BROADCAST COMMUNICATION METHOD AND APPARATUS**

(30) Priority: 28.03.2022 CN 202210313787
(71) Applicant: Huawei Technologies Co., Ltd., Shenzhen, Guangdong 518129 (CN)
(72) Inventor: GE, Cuili, Shenzhen, Guangdong 518129 (CN); LI, Meng, Shenzhen, Guangdong 518129 (CN); YANG, Yanmei, Shenzhen, Guangdong 518129 (CN)
(74) Representative: Körber, Martin Hans
(86) International application number: PCT/CN2023/083459
(87) International publication number: WO 2023/185643

(57) **Abstract**

This application discloses a multicast/broadcast communication method and an apparatus, and relates to the field of wireless communication. The method includes: receiving first information from an application function network element, and determining a target MB-SMF network element based on the first information. The first information includes a first identifier of a first MBS session and information about an MBS service area. The first MBS session is for transmitting data to the MBS service area. The target MB-SMF network element supports the MBS service area, and the target MB-SMF network element is configured to create the first MBS session. In the foregoing method, the target MB-SMF network element may be determined based on the first identifier of the first MBS session and the information about the MBS service area. Therefore, the target MB-SMF network element can serve the MBS service area, so that the target MB-SMF network element can provide a service for an AF network element corresponding to an MBS session.

## Description

This application claims priority to Chinese Patent Application No. 202210313787.1, filed with the China National Intellectual Property Administration on March 28, 2022 and entitled "MULTICAST/BROADCAST COMMUNICATION METHOD AND APPARATUS", which is incorporated herein by reference in its entirety.

### TECHNICAL FIELD

This application relates to the field of wireless communication, and in particular, to a multicast/broadcast communication method and an apparatus.

### BACKGROUND

Amulticast/broadcast service (multicast/broadcast service, MBS) is a service that sends data from one data source to a plurality of receivers. The MBS service includes an MBS groupcast service and an MBS broadcast service. The MBS groupcast service is to send data from a data source to a group of users. The MBS broadcast service is to send data from a data source to all users in a service area of the MBS broadcast service.

In a fifth generation (5th generation, 5G) broadcast/groupcast architecture, a network exposure function (network exposure function, NEF) network element or a multicast/broadcast service function (multicast/broadcast service function, MBSF) network element (referred to NEF/MBSF network element for short below) may request a network repository function (network repository function, NRF) network element to discover a multicast/broadcast session management function (multicast/broadcast session management function, MB-SMF) network element. However, the MB-SMF network element discovered by the NRF network element may fail to provide a service for an application function (application function, AF) network element corresponding to an MBS session.

### SUMMARY

Embodiments of this application provide a multicast/broadcast communication method and an apparatus, so that a discovered MB-SMF network element can provide a service for an AF network element corresponding to an MBS session.

To achieve the foregoing objective, the following technical solutions are used in embodiments of this application.

According to a first aspect, a multicast/broadcast communication method is provided. A communication apparatus that performs the method may be a first network element, or may be a module used in the first network element, for example, a chip or a chip system. The first network element may be an NEF/MBSF network element. The following provides descriptions by using an example in which the method is performed by the first network element. The method includes: receiving first information from an application function network element, where the first information includes a first identifier of a first MBS session and information about an MBS service area, and the first MBS session is for transmitting data to the MBS service area; and determining a target MB-SMF network element based on the first information, where the target MB-SMF network element supports the MBS service area, and the target MB-SMF network element is configured to create the first MBS session.

Based on the method provided in the first aspect, the first network element can receive, from the application function network element, the first identifier of the first MBS session and the information about the MBS service area, and determine the target MB-SMF network element based on the first identifier and the information about the MBS service area. Because the first network element considers the information about the MBS service area when determining the target MB-SMF network element, the target MB-SMF network element can support the MBS service area, or can serve the MBS service area, so that the target MB-SMF network element can provide a service for the application function network element corresponding to the first MBS session.

In a possible implementation, the determining a target MB-SMF network element based on the first information includes: sending a first request message to a network repository function network element, where the first request message is for requesting the network repository function network element to discover an MB-SMF network element, and the first request message includes the first information; receiving a first response message from the network repository function network element, where the first response message includes information about at least one MB-SMF network element, and the at least one MB-SMF network element meets at least one of the following: supporting the MBS service area but not supporting the first identifier, supporting both the MBS service area and the first identifier, or supporting the first identifier but not supporting the MBS service area; and determining the target MB-SMF network element based on the information about the at least one MB-SMF network element.

Based on the foregoing possible implementation, the first network element may send both the first identifier and the information about the MBS service area to the network repository function network element simultaneously, so that the network repository function network element can discover an MB-SMF based on the first identifier and/or the information about the MBS service area, and indicate the at least one MB-SMF network element to the first network element. In this way, the first network element may determine an MB-SMF network element supporting the MBS service area but not supporting the first identifier, or an MB-SMF network element supporting both the MBS service area and the first identifier as the target MB-SMF network element, so that the target MB-SMF network element can provide the application function network element with an MBS session service that meets the MBS service area.

In a possible implementation, the first request message further includes preference information, and the preference information triggers preferential discovery of an MB-SMF network element supporting the MBS service area. The at least one MB-SMF network element meets at least one of the following: supporting the MBS service area but not supporting the first identifier, or supporting both the MBS service area and the first identifier.

Based on the foregoing possible implementation, the network repository function network element may preferentially discover an MB-SMF network element supporting the MBS service area. In this way, the at least one MB-SMF network element may include an MB-SMF network element supporting the MBS service area but not supporting the first identifier, and/or an MB-SMF network element supporting both the MBS service area and the first identifier. In this way, the target MB-SMF network element determined by the first network element can provide a service for the application function network element corresponding to the first MBS session.

In a possible implementation, the target MB-SMF network element supports the first identifier.

Based on the foregoing possible implementation, the target MB-SMF network element supports both the MBS service area and the first identifier. Therefore, the network repository function network element can discover the target MB-SMF network element by using either the MBS service area or the first identifier, so that flexibility of discovering the MB-SMF network element by the network repository function network element is improved.

In a possible implementation, the target MB-SMF network element does not support the first identifier, and the at least one MB-SMF network element includes a first MB-SMF network element supporting the first identifier but not supporting the MBS service area. The method further includes: sending a first message to the first MB-SMF network element, where the first message triggers the first MB-SMF network element to disassociate the first identifier from the first MB-SMF network element.

Based on the foregoing possible implementation, when the target MB-SMF network element does not support the first identifier, the first identifier may be disassociated from the first MB-SMF network element supporting the first identifier. It may be understood that the first MB-SMF network element cannot serve the MBS service area. As a result, when an MB-SMF network element is searched for the first MBS session based on the first identifier, the first MB-SMF network element is not expected to be found. The first identifier is dissociated from the first MB-SMF network element, so that the first MB-SMF network element is not found when an MB-SMF network element is subsequently discovered based on the first identifier.

In a possible implementation, the determining a target MB-SMF network element based on the first information includes: sending a second request message to the network repository function network element, where the second request message is for requesting the network repository function network element to discover an MB-SMF network element, and the second request message includes the first identifier; receiving a second response message from the network repository function network element, where the second response message includes information about the first MB-SMF network element, and the first MB-SMF network element supports the first identifier; determining, based on the information about the first MB-SMF network element, that the first MB-SMF network element does not support the MBS service area; sending a third request message to the network repository function network element, where the third request message is for requesting the network repository function network element to discover an MB-SMF network element, and the third request message includes the information about the MBS service area; receiving a third response message from the network repository function network element, where the third response message includes information about at least one MB-SMF network element, and the at least one MB-SMF network element supports the MBS service area but does not support the first identifier; and determining one MB-SMF network element in the at least one MB-SMF network element as the target MB-SMF network element.

Based on the foregoing possible implementation, the first network element may first send the first identifier to the network repository function network element, so that the network repository function network element can discover, based on the first identifier, the first MB-SMF network element supporting the first identifier. If the first MB-SMF network element does not support the MBS service area, the first network element may send the information about the MBS service area to the network repository function network element, so that the network repository function network element can discover, based on the information about the MBS service area, the at least one MB-SMF network element supporting the MBS service area. In this way, the first network element can determine the target MB-SMF network element in the at least one MB-SMF network element, so that the target MB-SMF network element can provide a service for the application function network element corresponding to the first MBS session.

In a possible implementation, the target MB-SMF network element does not support the first identifier. The method further includes: sending the first message to the first MB-SMF network element, where the first message triggers the first MB-SMF network element to disassociate the first identifier from the first MB-SMF network element.

Based on the foregoing possible implementation, the first MB-SMF network element cannot serve the MBS service area. As a result, when an MB-SMF network element is searched for the first MBS session based on the first identifier, the first MB-SMF network element is not expected to be found. The first identifier is dissociated from the first MB-SMF network element, so that the first MB-SMF network element is not found when an MB-SMF network element is subsequently discovered based on the first identifier.

In a possible implementation, the target MB-SMF network element does not support the first identifier. The method further includes: sending a second message to the target MB-SMF network element, where the second message triggers the target MB-SMF network element to allocate an MBS session identifier to the first MBS session; and receiving a second identifier that is of the first MBS session and that is allocated by the target MB-SMF network element, where the target MB-SMF network element supports the second identifier.

Based on the foregoing possible implementation, the target MB-SMF network element may allocate a new identifier, to be specific, the second identifier, to the first MBS session. Then, the network repository function network element may discover the target MB-SMF network element based on the new identifier. For example, the first network element sends the new identifier to the network repository function network element, so that the network repository function network element discovers the target MB-SMF network element based on the new identifier.

In a possible implementation, the method further includes: sending a third message to the target MB-SMF network element, where the third message includes the first identifier, and the first identifier is used by the target MB-SMF network element to update the first identifier to a profile of the target MB-SMF network element.

Based on the foregoing possible implementation, the first identifier may be associated with the target MB-SMF network element. Subsequently, when an MB-SMF network element is discovered based on the first identifier, the target MB-SMF network element can be discovered.

According to a second aspect, a multicast/broadcast communication method is provided. A communication apparatus that performs the method may be a network repository function network element, or may be a module used in the network repository function network element, for example, a chip or a chip system. The following provides descriptions by using an example in which the method is performed by the network repository function network element. The method includes: receiving a first request message from a first network element, where the first request message is for requesting to discover an MB-SMF network element, the first request message includes first information, the first information includes a first identifier of a first MBS session and information about an MBS service area, and the first MBS session is for transmitting data to the MBS service area; and sending a first response message to the first network element, where the first response message includes information about at least one MB-SMF network element, and the at least one MB-SMF network element meets at least one of the following: supporting the MBS service area but not supporting the first identifier, supporting both the MBS service area and the first identifier, or supporting the first identifier but not supporting the MBS service area.

Based on the method provided in the second aspect, the network repository function network element may discover an MB-SMF based on the first identifier and/or the information about the MBS service area, and indicate the at least one MB-SMF network element to the first network element, so that the first network element can determine an MB-SMF network element supporting the MBS service area but not supporting the first identifier, or an MB-SMF network element supporting both the MBS service area and the first identifier as a target MB-SMF network element. Therefore, the target MB-SMF network element can provide a service for an application function network element corresponding to the first MBS session.

In a possible implementation, the first request message further includes preference information, and the preference information triggers preferential discovery of an MB-SMF network element supporting the MBS service area. The at least one MB-SMF network element includes an MB-SMF network element supporting the MBS service area but not supporting the first identifier, and an MB-SMF network element supporting both the MBS service area and the first identifier.

Based on the foregoing possible implementation, the network repository function network element may preferentially discover an MB-SMF network element supporting the MBS service area. In this way, the at least one MB-SMF network element may include an MB-SMF network element supporting the MBS service area but not supporting the first identifier, and/or an MB-SMF network element supporting both the MBS service area and the first identifier. In this way, the target MB-SMF network element determined by the first network element can provide a service for the application function network element corresponding to the first MBS session.

In a possible implementation, the method further includes: receiving a first update message from the target MB-SMF network element, where the target MB-SMF network element is included in the at least one MB-SMF network element, the target MB-SMF network element supports the MBS service area, the target MB-SMF network element is configured to create the first MBS session, and the first update message triggers updating the first identifier to a profile of the target MB-SMF network element; and adding, based on the first update message, the first identifier to a profile of the target MB-SMF network element.

Based on the foregoing possible implementation, the first identifier may be associated with the target MB-SMF network element. Subsequently, when an MB-SMF network element is discovered based on the first identifier, the target MB-SMF network element can be discovered.

In a possible implementation, the adding, based on the first update message, the first identifier to a profile of the target MB-SMF network element includes: storing the first identifier in the profile as a serving MBS session identifier.

Based on the foregoing possible implementation, the target MB-SMF network element may be discovered by using the first identifier, so that the target MB-SMF network element provides a service for the application function network element corresponding to the first MBS session.

In a possible implementation, the at least one MB-SMF network element includes a first MB-SMF network element supporting the first identifier but not supporting the MBS service area. The method further includes: receiving a second update message from the first MB-SMF network element, where the second update message triggers disassociating the first identifier from the first MB-SMF network element; and disassociating, based on the second update message, the first identifier from the first MB-SMF network element.

Based on the foregoing possible implementation, when the at least one MB-SMF network element includes the first MB-SMF network element supporting the first identifier but not support the MBS service area, the first identifier may be disassociated from the first MB-SMF network element supporting the first identifier. It may be understood that the first MB-SMF network element cannot serve the MBS service area. As a result, when an MB-SMF network element is searched for the first MBS session based on the first identifier, the first MB-SMF network element is not expected to be found. The first identifier is dissociated from the first MB-SMF network element, so that the first MB-SMF network element is not found when an MB-SMF network element is subsequently discovered based on the first identifier.

In a possible implementation, the disassociating, based on the second update message, the first identifier from the first MB-SMF network element includes: deleting the first identifier from a session identifier range included in a profile of the first MB-SMF network element; or setting the first identifier in the session identifier range included in the profile of the first MB-SMF network element to an invalid session identifier.

Based on the foregoing possible implementation, the first identifier may be deleted from the session identifier range included in the profile of the first MB-SMF network element, or the first identifier in the session identifier range included in the profile of the first MB-SMF network element is set to an invalid session identifier, so that the first identifier is disassociated from the first MB-SMF network element.

In a possible implementation, the first network element is a network exposure function network element, a multicast/broadcast service function network element, or an application function network element.

Based on the foregoing possible implementation, the network presentation function network element, the multicast/broadcast service function network element, and the application function network element can all trigger the network repository function network element to discover an MB-SMF network element.

According to a third aspect, a multicast/broadcast communication method is provided. A communication apparatus that performs the method may be an MB-SMF network element, or may be a module used in the MB-SMF network element, for example, a chip or a chip system. The following provides descriptions by using an example in which the method is performed by the MB-SMF network element. The method includes: receiving a third message from a first network element, where the third message includes a first identifier of a first MBS session, and the first identifier is used by the MB-SMF network element to update the first identifier to a profile of the MB-SMF network element; and sending a first update message to a network repository function network element, where the first update message includes the first identifier, and the first update message triggers storing the first identifier in the profile as a serving MBS session identifier.

Based on the method provided in the third aspect, the MB-SMF network element may store the first identifier in the profile as the serving MBS session identifier based on an indication of the first network element. In this way, the network repository function network element can discover a target MB-SMF network element by using the first identifier.

In a possible implementation, the first network element is a network exposure function network element, a multicast/broadcast service function network element, or an application function network element.

Based on the foregoing possible implementation, the network exposure function network element, the multicast/broadcast service function network element, and the application function network element can all trigger the network repository function network element to store the first identifier in the profile as the serving MBS session identifier.

According to a fourth aspect, a communication apparatus is provided, and is configured to implement the foregoing methods. The communication apparatus may be the first network element in the first aspect, or an apparatus including the first network element. Alternatively, the communication apparatus may be the network repository function network element in the second aspect, or an apparatus including the network repository function network element. Alternatively, the communication apparatus may be the MB-SMF network element in the third aspect, or an apparatus including the MB-SMF network element. The communication apparatus includes a corresponding module, unit, or means (means) for implementing the foregoing methods. The module, the unit, or the means may be implemented by hardware or software, or implemented by hardware by executing corresponding software. The hardware or the software includes one or more modules or units corresponding to the foregoing functions.

According to a fifth aspect, a communication apparatus is provided, including a processor. The processor is configured to: after being coupled to a memory and reading instructions in the memory, perform, based on the instructions, the method according to any one of the foregoing aspects. The communication apparatus may be the first network element in the first aspect, or an apparatus including the first network element. Alternatively, the communication apparatus may be the network repository function network element in the second aspect, or an apparatus including the network repository function network element. Alternatively, the communication apparatus may be the MB-SMF network element in the third aspect, or an apparatus including the MB-SMF network element.

With reference to the fifth aspect, in a possible implementation, the communication apparatus further includes the memory. The memory is configured to store necessary program instructions and data.

With reference to the fifth aspect, in a possible implementation, the communication apparatus is a chip or a chip system. Optionally, when the communication apparatus is the chip system, the communication apparatus may include a chip, or may include a chip and another discrete component.

According to a sixth aspect, a communication apparatus is provided, including a processor and an interface circuit. The interface circuit is configured to receive a computer program or instructions and transmit the computer program or the instructions to the processor. The processor is configured to execute the computer program or the instructions, to enable the communication apparatus to perform the method according to any one of the foregoing aspects.

With reference to the sixth aspect, in a possible implementation, the communication apparatus is a chip or a chip system. Optionally, when the communication apparatus is the chip system, the communication apparatus may include a chip, or may include a chip and another discrete component.

According to a seventh aspect, a computer-readable storage medium is provided. The computer-readable storage medium stores instructions. When the instructions are run on a computer, the computer is enabled to perform the method according to any one of the foregoing aspects.

According to an eighth aspect, a computer program product including instructions is provided. When the computer program product runs on a computer, the computer is enabled to perform the method according to any one of the foregoing aspects.

For technical effects achieved by any one of the possible implementations of the fourth aspect to the eighth aspect, refer to technical effects achieved by any one of the first aspect to the third aspect or different possible implementations in any one of the aspects. Details are not described herein again.

According to a ninth aspect, a communication system is provided. The communication system includes a first network element configured to perform the method in the first aspect, a network repository function network element configured to perform the method in the second aspect, and an MB-SMF network element configured to perform the method in the third aspect.

According to a tenth aspect, a multicast/broadcast communication method is provided. A communication apparatus that performs the method may be a first network element, or may be a module used in the first network element, for example, a chip or a chip system. The first network element may be an NEF/MBSF network element. The following provides descriptions by using an example in which the method is performed by the first network element. The method includes: receiving a fourth request message from an application function network element, where the fourth request message is for requesting to allocate an identifier of an MBS session, and the fourth request message includes information about an MBS service area; sending a fifth request message to a network repository function network element, where the fifth request message is for requesting the network repository function network element to discover an MB-SMF network element, and the fifth request message includes the information about the MBS service area; and receiving, from the network repository function network element, a response message of the fifth request message, where the response message includes information about a target MB-SMF network element, the target MB-SMF network element supports the MBS service area, and the target MB-SMF network element is configured to create the MBS session.

Based on the method provided in the tenth aspect, the first network element may receive, from the application function network element, the information about the MBS service area, and send the information about the MBS service area to the network repository function network element, so that the network repository function network element can discover an MB-SMF network element based on the information about the MBS service area. Because the information about the MBS service area is considered when an MB-SMF network element is discovered, the MB-SMF network element discovered by the network repository function network element can support the MBS service area, or can serve the MBS service area, so that the MB-SMF network element discovered by the network repository function network element can provide a service for the application function network element corresponding to the MBS session.

In a possible implementation, the method further includes: sending a sixth request message to the target MB-SMF network element, where the sixth request message triggers the target MB-SMF network element to allocate an MBS session identifier to the MBS session; and receiving, from the target MB-SMF network element, a third identifier of the MBS session, where the target MB-SMF network element supports the third identifier, and the third identifier has an association relationship with the MBS service area.

Based on the foregoing possible implementation, the target MB-SMF network element may allocate a new identifier, to be specific, the third identifier, to the MBS session, and associate the third identifier with the MBS service area. Then, the network repository function network element may discover the target MB-SMF network element based on the new identifier and/or the MBS service area.

In a possible implementation, the method further includes: sending the third identifier and the information about the MBS service area to the application function network element.

Based on the foregoing possible implementation, the third identifier and the information about the MBS service area may be indicated to the application function network element, so that the application function network element subsequently triggers the network repository function network element to discover the target MB-SMF network element based on the third identifier and/or the information about the MBS service area.

In a possible implementation, the fourth request message is a temporary multicast group identity allocation request message.

Based on the foregoing possible implementation, the temporary multicast group identity allocation request message may be used to request allocation of the identifier of the MBS session.

According to an eleventh aspect, a multicast/broadcast communication method is provided. A communication apparatus performing the method may be an MB-SMF network element, or may be a module used in the MB-SMF network element, for example, a chip or a chip system. The following provides descriptions by using an example in which the method is performed by the MB-SMF network element. The method includes: receiving a sixth request message from a first network element, where the sixth request message triggers the MB-SMF network element to allocate an MBS session identifier to an MBS session, and the sixth request message includes information about an MBS service area; allocating a third identifier to the MBS session based on the sixth request message, where the third identifier identifies the MBS session, and the MBS session is for transmitting data to the MBS service area; and sending the third identifier to the first network element.

Based on the method provided in the eleventh aspect, a new identifier, to be specific, the third identifier, may be allocated to the MBS session, and the third identifier is associated with the MBS service area. Then, a network repository function network element may discover a target MB-SMF network element based on the new identifier and/or the MBS service area.

In a possible implementation, the MB-SMF network element stores a profile, and the profile stores the third identifier and the information about the MBS service area corresponding to the third identifier.

Based on the foregoing possible implementation, the third identifier and the information about the MBS service area corresponding to the third identifier may be stored in the profile in the MB-SMF network element, to associate the third identifier with the MBS service area.

In a possible implementation, the method further includes: sending a third update message to the network repository function network element, where the third update message triggers the network repository function network element to add an association relationship between the third identifier and the MBS service area to the profile in the MB-SMF network element.

Based on the foregoing possible implementation, the network repository function network element may be triggered to associate the third identifier with the MBS service area. Then, the network repository function network element may discover the target MB-SMF network element based on the third identifier and/or the MBS service area.

In a possible implementation, the first network element is a network exposure function network element, a multicast/broadcast service function network element, or an application function network element.

Based on the foregoing possible implementation, the network presentation function network element, the multicast/broadcast service function network element, and the application function network element can all trigger the network repository function network element to discover an MB-SMF network element.

According to a twelfth aspect, a communication apparatus is provided, and is configured to implement the foregoing methods. The communication apparatus may be the first network element in the tenth aspect, or an apparatus including the first network element. Alternatively, the communication apparatus may be the MB-SMF network element in the eleventh aspect, or an apparatus including the MB-SMF network element. The communication apparatus includes a corresponding module, unit, or means (means) for implementing the foregoing methods. The module, the unit, or the means may be implemented by hardware or software, or implemented by hardware by executing corresponding software. The hardware or the software includes one or more modules or units corresponding to the foregoing functions.

According to a thirteenth aspect, a communication apparatus is provided, including a processor. The processor is configured to: after being coupled to a memory and reading instructions in the memory, perform, based on the instructions, the method according to either the tenth aspect or the eleventh aspect. The communication apparatus may be the first network element in the tenth aspect, or an apparatus including the first network element. Alternatively, the communication apparatus may be the MB-SMF network element in the eleventh aspect, or an apparatus including the MB-SMF network element.

With reference to the thirteenth aspect, in a possible implementation, the communication apparatus further includes the memory. The memory is configured to store necessary program instructions and data.

With reference to the thirteenth aspect, in a possible implementation, the communication apparatus is a chip or a chip system. Optionally, when the communication apparatus is the chip system, the communication apparatus may include a chip, or may include a chip and another discrete component.

According to a fourteenth aspect, a communication apparatus is provided, including a processor and an interface circuit. The interface circuit is configured to receive a computer program or instructions and transmit the computer program or the instructions to the processor. The processor is configured to execute the computer program or the instructions, to enable the communication apparatus to perform the method according to either the tenth aspect or the eleventh aspect.

With reference to the fourteenth aspect, in a possible implementation, the communication apparatus is a chip or a chip system. Optionally, when the communication apparatus is the chip system, the communication apparatus may include a chip, or may include a chip and another discrete component.

According to a fifteenth aspect, a computer-readable storage medium is provided. The computer-readable storage medium stores instructions. When the instructions are run on a computer, the computer is enabled to perform the method according to either the tenth aspect or the eleventh aspect.

According to a sixteenth aspect, a computer program product including instructions is provided. When the computer program product runs on a computer, the computer is enabled to perform the method according to either the tenth aspect or the eleventh aspect.

For technical effects achieved by any one of the possible implementations of the twelfth aspect to the sixteenth aspect, refer to technical effects achieved by either of the tenth aspect or the eleventh aspect or different possible implementations in any one of the aspects. Details are not described herein again.

According to a seventeenth aspect, a communication system is provided. The communication system includes a first network element configured to perform the method in the tenth aspect and an MB-SMF network element configured to perform the method in the eleventh aspect.

It may be noted that the solutions in the foregoing aspects may be combined on the premise that the solutions are not contradictory.

### BRIEF DESCRIPTION OF DRAWINGS

FIG. 1 is a schematic diagram of an architecture of a communication system according to an embodiment of this application;
FIG. 2 is a schematic diagram of a 5G broadcast/groupcast architecture according to an embodiment of this application;
FIG. 3 is a schematic diagram of a hardware structure of a communication apparatus according to an embodiment of this application;
FIG. 4 is a schematic flowchart 1 of a multicast/broadcast communication method according to an embodiment of this application;
FIG. 5 is a schematic flowchart 2 of a multicast/broadcast communication method according to an embodiment of this application;
FIG. 6A is a schematic diagram 1 of a profile to which a first identifier is added according to an embodiment of this application;
FIG. 6B is a schematic diagram 2 of a profile to which a first identifier is added according to an embodiment of this application;
FIG. 7 is a schematic flowchart 3 of a multicast/broadcast communication method according to an embodiment of this application;
FIG. 8 is a schematic diagram 1 of a structure of a communication apparatus according to an embodiment of this application;
FIG. 9 is a schematic diagram 2 of a structure of a communication apparatus according to an embodiment of this application; and
FIG. 10 is a schematic diagram 3 of a structure of a communication apparatus according to an embodiment of this application.

### DESCRIPTION OF EMBODIMENTS

Before embodiments of this application are described, a related procedure of an MBS in embodiments of this application is first described.

### (1) Registration procedure of an MB-SMF network element

S1.1: The MB-SMF network element sends a registration request message to an NRF network element. Correspondingly, the NRF network element receives the registration request message from the MB-SMF network element.

It may be understood that, before providing a service for another network element, the MB-SMF may first send the registration request message to the NRF network element, to initiate the registration procedure of the MB-SMF network element. The registration request message may request to register multicast capability information of the MB-SMF network element to the NRF network element. The multicast capability information may include at least one of the following: one or more slice identifiers (single network slice selection assistance information, S-NSSAI), a slice instance identifier (network slice instance identifier, NSI ID) associated with a slice, one or more data network names (data network names, DNNs), a service area (service area) of the MB-SMF network element, and a temporary multicast group identity (temporary multicast group identity, TMGI) range (TMGI range). The service area of the MB-SMF network element may be a group of tracking area identity (tracking area identity, TAI) lists, and the TMGI range may be a group of consecutive or inconsecutive TMGI values.

In an example, the registration request message may invoke a registration service (for example, an Nnrf_NFManagement_NFRegister service) of the NRF to register the multicast capability information of the MB-SMF network element to the NRF network element as a part of a profile (profile) of the MB-SMF network element. The profile may be stored in the NRF network element, and is for storing related information of the MB-SMF network element.

S1.2: The NRF network element stores the multicast capability information of the MB-SMF network element in the profile of the MB-SMF network element.

### (2) Update procedure of information about MB-SMF network element

S2. 1: The MB-SMF network element sends an update request message to an NRF network element. Correspondingly, the NRF network element receives the update request message from the MB-SMF network element.

It may be understood that, if related information of the MB-SMF network element changes, the MB-SMF network element may send the update request message to the NRF network element, to initiate the update procedure of the information about the MB-SMF network element. The update request message may include changed information, for example, a TMGI and/or information about an MBS service area (MBS service area) corresponding to the MB-SMF network element. The information about the MBS service area indicates the MBS service area. It should be understood that, if a TMGI range corresponding to the MB-SMF network element already includes the TMGI, the update request message does not include the TMGI.

S2.2: The NRF network element updates the information included in the update request message to a profile of the MB-SMF network element.

### (3) Procedure in which an NRF network element discovers an MB-SMF network element

S3.1: A second network element sends a discovery request message to an NRF network element. Correspondingly, the NRF network element receives the discovery request message from the second network element.

The second network element may be an access and mobility management function (access and mobility management function, AMF) network element, a session management function (session management function, SMF) network element, an NEF network element, an MBSF network element, or an application function (application function, AF) network element. The discovery request message may request the NRF network element to discover an MB-SMF network element.

In a possible implementation, the discovery request message may include at least one of the following: location information (UE location) of user equipment (user equipment, UE), an identifier of an MBS session, or an area session identifier (area session ID). The identifier of the MBS session identifies the MBS session. For example, the identifier of the MBS session is a TMGI. The area session identifier is an internal identifier in an MBS session of a location independent service and is used together with a TMGI to identify a data flow (data flow) for sending data to a specific area.

For example, if the second network element is an AMF network element or an SMF network element, the discovery request message includes location information of UE and an identifier of an MBS session. If the second network element is an NEF/MBSF network element, the discovery request message includes an identifier of an MBS session.

It may be understood that, after receiving the discovery request message, the NRF network element may select, based on the discovery request message, an MB-SMF network element in a profile of a local MB-SMF network element. For example, if the discovery request message includes a TMGI and location information of UE, for example, a TAI in which the UE is currently located, the NRF network element searches profiles of a plurality of MB-SMF network elements stored in the NRF for whether a service area of an MB-SMF network element includes the location information of the UE and whether a TMGI range in a profile of an MB-SMF network element includes the TMGI, and determines an MB-SMF network element that includes the location information of the UE and corresponds to the profile including the TMGI as a selected MB-SMF network element. For another example, if the discovery request message includes an MBS session identifier (MBS Session ID), the NRF searches session identifier ranges in profiles of a plurality of MB-SMF stored in the NRF network element for whether the MBS session identifier is included, and determines an MB-SMF network element corresponding to a profile including the MBS session identifier as a selected MB-SMF network element.

In another possible implementation, if the discovery request message does not include the foregoing information, the NRF network element may select an MB-SMF based on a preset policy. For example, the NRF network element randomly selects an MB-SMF.

S3.2: The NRF network element sends a discovery response message to the second network element. Correspondingly, the second network element receives the discovery response message from the NRF network element.

The discovery response message may indicate the MB-SMF network element selected by the NRF network element.

### (4) Procedure of allocating an MBS session identifier

S4.1: An AF network element sends an MBS session identifier allocation request message 1 to an NEF/MBSF network element. Correspondingly, the NEF/MBSF network element receives the MBS session identifier allocation request message 1 from the AF.

The MBS session identifier allocation request message 1 may request to allocate at least one MBS session identifier, to identify a to-be-created MBS session. The MBS session identifier allocation request message 1 may include a quantity of at least one MBS session identifier. For example, the MBS session identifier allocation request message 1 is an Nnef_TMGI_Allocate Request message, and the Nnef_TMGI_Allocate Request message includes a quantity of TMGIs (TMGI number).

S4.2: The NEF/MBSF network element performs authorization check on the AF network element (checks authorization of AF), to determine whether the AF network element is valid, and determine whether the AF network element can perform an operation of requesting to allocate at least one MBS session identifier.

It may be understood that, when the AF network element is located in a trusted domain (trusted domain), S4.2 may not be performed.

It may be understood that, when the NEF/MBSF network element successfully performs authorization check on the AF network element, in other words, determines whether the AF network element is valid, and determines that the AF network element can perform the operation of requesting to allocate at least one MBS session identifier, the NEF/MBSF network element may perform S4.3.

S4.3. The NEF/MBSF network element determines an MB-SMF network element 1 configured to allocate an MBS session identifier.

In a possible implementation, the NEF/MBSF network element determines the MB-SMF network element 1 by using an NRF network element, in other words, the NEF/MBSF network element determines the MB-SMF network element 1 by using the foregoing procedure in which the NRF network element discovers an MB-SMF network element. For example, the NEF/MBSF network element sends a discovery request message to the NRF network element. After receiving the discovery request message, the NRF network element determines candidate MB-SMF network elements based on a preset policy, and notifies the candidate MB-SMF network elements to the NEF/MBSF network element via a discovery response message. After receiving the discovery response message, the NEF/MBSF network element may determine the MB-SMF network element 1 from the candidate MB-SMF network elements.

In another possible implementation, the NEF/MBSF network element locally stores related information of a plurality of MB-SMF network elements, and determines the MB-SMF network element 1 in the plurality of MB-SMF network elements based on a preset policy.

S4.4: The NEF/MBSF network element sends an MBS session identifier allocation request message 2 to the MB-SMF network element 1. Correspondingly, the MB-SMF network element 1 receives the MBS session identifier allocation request message 2 from the NEF/MBSF network element.

The MBS session identifier allocation request message 2 may request to allocate at least one MBS session identifier, to identify the to-be-created MBS session. The MBS session identifier allocation request message 2 may include a quantity of at least one MBS session identifier. For example, the MBS session identifier allocation request message 2 is an Nmbsmf_TMGI_Allocate Request message, and the Nmbsmf_TMGI_Allocate Request message includes a quantity of TMGIs.

It may be understood that, after receiving the MBS session identifier allocation request message 2, the MB-SMF network element 1 may allocate at least one identifier to the to-be-created MBS session. A quantity of the at least one identifier is less than or equal to the quantity of the at least one MBS session identifier.

S4.5: The MB-SMF network element 1 sends the at least one identifier to the NEF/MBSF network element. Correspondingly, the NEF/MBSF network element receives the at least one identifier of the MB-SMF network element 1.

In a possible implementation, the at least one identifier may be carried in an Nmbsmf_TMGI_Allocate response message. For example, the Nmbsmf_TMGI_Allocate response message may include a TMGI allocated by the MB-SMF network element 1 and expiration time (expiration time) of the TMGI.

S4.6: The NEF/MBSF network element sends the at least one identifier to the AF network element. Correspondingly, the AF network element receives the at least one identifier from the NEF/MBSF network element.

In a possible implementation, the at least one identifier may be carried in an Nnef_TMGI_Allocate Response message. For example, the Nnef_TMGI_Allocate Response message includes the TMGI allocated by the MB-SMF network element 1 and the expiration time of the TMGI.

Optionally, after S4.6, the AF network element may send a service announcement (Service Announcement) message to UE. Specifically, the AF network element may send information about the MBS session to the UE. The information about the MBS session may include an MBS session identifier. The MBS session identifier may include the at least one identifier or a source specific IP multicast address (source specific IP multicast address, SSM). The SSM may be allocated by the AF network element. Optionally, the information about the MBS session further includes at least one of the following: information about an MBS service area (MBS service area) or MBS session description information. The information about the MBS service area may include at least one of the following: an identifier (for example, a cell identifier list (Cell ID list)) of at least one cell (cell), at least one TAI (for example, a TAI list (TAI list)), geographical area information, or administrative region information. It may be understood that the identifier of at least one cell or the at least one tracking area identity is applicable to an AF network element located in a trusted domain. In other words, for the AF network element located in the trusted domain, the information about the MBS service area may include the identifier of at least one cell or the at least one tracking area identity. For an AF network element not located in the trusted domain, the information about the MBS service area does not include the identifier of at least one cell or the at least one tracking area identity.

It may be understood that the AF network element may further indicate, to the UE, whether the MBS session is a broadcast session or a groupcast session, so that the UE determines whether to perform an operation of joining the session. For example, if the MBS session is a broadcast session, the UE does not join the session, but listens to a message. If the MBS session is a groupcast session, the UE joins the groupcast session. In this embodiment of this application, groupcast and multicast may be replaced with each other.

### (5) MBS session creation procedure

S5.1: An AF network element sends an MBS session creation request (for example, Nnef_MBSSession_Create request) message 1 to an NEF/MBSF network element. Correspondingly, the NEF/MBSF network element receives the MBS session creation request message 1 from the AF network element.

The MBS session creation request message 1 may include information about a service type (service type), information about an MBS (MBS information), and indication information indicating whether an MBS session identifier needs to be allocated (for example, a TMGI allocation indication).

The service type may include a groupcast service (multicast service) or a broadcast service (broadcast service). The information about the MBS may include at least one of the following: quality of service (quality of service, QoS) requirement information, indication information indicating whether any UE is allowed to join a groupcast MBS session (for example, Any UE indication), information about an MBS service area, MBS session start time, MBS session end time, information about an MBS session status, or indication information indicating whether to allocate an ingress transport address (ingress transport address). The MBS session status includes an activation state or a deactivation state.

Optionally, the MBS session creation request message 1 further includes an MBS session identifier. For example, if a procedure of allocating an MBS session identifier is performed before S5.1, the MBS session creation request message 1 includes the allocated MBS session identifier. If the procedure of allocating an MBS session identifier is not performed before S5. 1, the MBS session creation request message 1 does not include the MBS session identifier, or the MBS session creation request message 1 includes an SSM. It may be understood that, if the MBS session creation request message 1 does not include the MBS session identifier, or the MBS session creation request message 1 includes the SSM, the indication information indicating whether an MBS session identifier needs to be allocated may indicate to allocate the MBS session identifier.

It may be understood that, if the information about the MBS service area includes geographic area information or administrative region information, the NEF/MBSF network element may translate the information about the MBS service area into a Cell ID list or a TAI list.

S5.2: The NEF/MBSF network element performs authorization check on the AF network element, to determine whether the AF network element is valid, and determine whether the AF network element can perform an operation of creating an MBS session.

It may be understood that, when the AF network element is located in a trusted domain, S5.2 may not be performed.

It may be understood that, when the NEF/MBSF network element successfully performs authorization check on the AF network element, in other words, determines whether the AF network element is valid, and determines that the AF network element can perform the operation of creating the MBS session, the NEF/MBSF network element may perform S5.3.

S5.3. The NEF/MBSF network element determines an MB-SMF network element 2 configured to create an MBS session.

In a possible implementation, the NEF/MBSF network element determines the MB-SMF network element 2 by using an NRF network element, in other words, the NEF/MBSF network element determines the MB-SMF network element 2 by using the foregoing procedure in which the NRF network element discovers an MB-SMF network element. For example, when the procedure of allocating an MBS session identifier is not performed before S5.1, the NEF/MBSF network element sends a discovery request message to the NRF network element. After receiving the discovery request message, the NRF network element determines candidate MB-SMF network elements based on a preset policy, and notifies the candidate MB-SMF network elements to the NEF/MBSF network element via a discovery response message. After receiving the discovery response message, the NEF/MBSF network element may determine the MB-SMF network element 2 in the candidate MB-SMF network elements. When the procedure of allocating an MBS session identifier is performed before S5.1, the NEF/MBSF network element sends a discovery request message to the NRF network element, where the discovery request message includes the MBS session identifier. After receiving the discovery request message, the NRF network element searches for the MB-SMF network element 2 based on the MBS session identifier, and indicates the found MB-SMF network element 2 to the NEF/MBSF network element via a discovery response message.

In another possible implementation, the NEF/MBSF network element locally stores related information of a plurality of MB-SMF network elements, and determines the MB-SMF network element 2 in the plurality of MB-SMF network elements based on a preset policy or the MBS session identifier.

S5.4: The NEF/MBSF network element sends an MBS session creation request (for example, Nmbsmf_MBSSession_Create Request) message 2 to the MB-SMF network element 2. Correspondingly, the MB-SMF network element 2 receives the MBS session creation request message 2 from the NEF/MBSF network element.

In addition to requesting to create an MBS session, the MBS session creation request message 2 may further request to reserve an ingress resource for the MBS session. The MBS session creation request message 2 may include at least one of the following: the MBS session identifier, the information about the service type, the indication information indicating whether an MBS session identifier needs to be allocated, the indication information indicating whether any UE is allowed to join the groupcast MBS session, the information about the MBS service area, the information about the MBS session status, or the indication information indicating whether an ingress transport address is allocated. For descriptions of the foregoing information, refer to corresponding descriptions in S5.1.

It may be understood that, if the MBS session creation request message 1 in S5.1 includes the indication information indicating whether any UE is allowed to join the groupcast MBS session, the MBS session creation request message 2 also includes the indication information. If the MBS session creation request message 1 in S5.1 includes the information about the MBS service area, the MBS session creation request message 2 also includes the information about the MBS service area.

It may be understood that if the MBS session identifier in the MBS session creation request message 2 includes the SSM, or the indication information indicating whether an MBS session identifier needs to be allocated indicates that an MBS session identifier needs to be allocated, after receiving the MBS session creation request message 2, the MB-SMF network element 2 may allocate an MBS session identifier, for example, allocate a TMGI.

It may be understood that if the MBS session identifier in the MBS session creation request message 2 includes the SSM, the MB-SMF network element 2 may enable, by using an update procedure of information about an MB-SMF network element, an NFR network element to add the SSM to a serving MBS session identifier (serving MBS Session ID) included in a profile of the MB-SMF network element 2.

It may be understood that, if the MBS session creation request message 2 includes the information about the MBS service area, the MB-SMF network element 2 may enable, by using an update procedure of information about an MB-SMF network element, the NFR network element to add the information about the MBS service area to a profile of the MB-SMF network element 2.

S5.5. The MB-SMF network element 2 locally obtains a QoS parameter.

S5.6. The MB-SMF network element 2 determines a multicast/broadcast user plane function (multicast/broadcast user plane function, MB-UPF) network element.

It may be understood that, if the indication information indicating whether an ingress transport address is allocated and that is in the MBS session creation request message 2 indicates to allocate an ingress transport address, the MB-SMF network element 2 may request the MB-UPF network element to allocate the address. The MB-UPF network element can select one ingress transport address and tunnel endpoint (tunnel endpoint) and return the ingress transport address and the tunnel endpoint to the MB-SMF network element 2. The ingress transport address may include an Internet Protocol (Internet Protocol, IP) address and a port (port). If the indication information indicating whether an ingress transport address is allocated and that is in the MBS session creation request message 2 indicates not to allocate an ingress transport address, the MB-SMF network element 2 sends the SSM to the MB-UPF network element, to request the MB-UPF network element to join a corresponding groupcast tree. The MB-SMF network element 2 may alternatively delay configuring the MB-UPF network element to join the groupcast tree. For example, when an MBS session is activated, the MB-SMF network element 2 requests the MB-UPF network element to join the corresponding groupcast tree.

It may be understood that, if data is transmitted between the MB-UPF network element and a radio access network (radio access network, RAN) device in a multicast manner, the MB-SMF network element 2 may request the MB-UPF network element to allocate a multicast-related identifier such as a multicast tunnel identifier, for example, a source IP address (source IP address), an SSM, or a general packet radio service (general packet radio service, GPRS) tunneling protocol (GPRS tunneling protocol, GTP) tunnel identifier (GTP Tunnel ID).

S5.7: The MB-SMF network element 2 sends a response message of the MBS session creation request message 2 to the NEF/MBSF network element. Correspondingly, the NEF/MBSF network element receives, from the MB-SMF network element 2, the response message of the MBS session creation request message 2.

It may be understood that, in S5.4, if the indication information indicating whether an ingress transport address is allocated indicates to allocate an ingress transport address, and the MB-UPF network element allocates the ingress transmission address, the response message of the MBS session creation request message 2 includes the ingress transmission address. If the NEF/MBSF network element determines to use a multicast/broadcast service transport function (multicast/broadcast service transport function, MBSTF) network element, the NEF/MBSF network element sends the ingress transport address to the MBSTF network element as a downlink destination address. The NEF/MBSF network element may further request the MBSTF network element to allocate a user plane ingress resource. If the indication information indicating whether an ingress transport address is allocated indicates not to allocate an ingress transport address, the NEF/MBSF network element sends the SSM to the MBSTF network element, to indicate the MBSTF network element to join a corresponding groupcast tree based on the SSM.

It may be understood that, in S5.4, if the indication information indicating whether an MBS session identifier needs to be allocated indicates to allocate an MBS session identifier, the response message of the MBS session creation request message 2 further includes the MBS session identifier allocated by the MB-SMF network element 2.

Optionally, the response message of the MBS session creation request message 2 may further indicate whether a transport resource allocated by the MB-UPF network element is successfully reserved.

S5.8: The NEF/MBSF network element sends a response message (for example, Nnef_MBSSession_Create response) of the MBS session creation request message 1 to the AF network element. Correspondingly, the AF network element receives, from the NEF/MBSF network element, the response message of the MBS session creation request message 1.

The response message of the MBS session creation request message 1 may include at least one of the following: an MBS session identifier or an ingress transport address. For example, if the MBS session creation request message 1 does not include the MBS session identifier, or the MBS session identifier in the MBS session creation request message 1 includes the SSM, the response message of the MBS session creation request message 1 includes the MBS session identifier allocated by the MB-SMF network element 2.

It may be understood that, after S5.8 is performed, the MBS session is created.

Optionally, after S5.8, the AF network element can send a service announcement message to UE. For a specific process in which the AF network element sends the service announcement message to the UE, refer to the foregoing descriptions. Details are not described herein again. It may be understood that, after the AF network element sends the service announcement to the UE, for groupcast communication, the UE may join a groupcast session based on the service announcement message.

It may be understood that the foregoing procedures may be performed in combination with each other. For example, the registration procedure of the MB-SMF network element may be first performed, and then the update procedure of the information about the MB-SMF network element is performed. For another example, the procedure of allocating an MBS session identifier allocation may be first performed, and then the MBS session creation procedure is performed. For another example, the registration procedure of the MB-SMF network element may be first performed, then the procedure of allocating an MBS session identifier is performed, and finally the MBS session creation procedure is performed.

It may be understood that, in the foregoing procedure of discovering the MB-SMF network element in the NRF network element, the NRF network element may discover the MB-SMF network element based on the location information of the UE, the identifier of the MBS session, the area session identifier, or the preset policy that is provided by a network element that requests to discover an MB-SMF network element. However, when the MB-SMF network element is discovered by using the method, it cannot be ensured that the MB-SMF network element discovered by the NRF network element can support the MBS service area. In other words, the MB-SMF network element discovered by the NRF network element may not serve a current MBS service area. In this case, the MB-SMF network element discovered by the NRF network element cannot create an MBS session corresponding to the MBS service area. In other words, the MB-SMF network element discovered by the NRF network element cannot provide a service for the AF network element.

To resolve the foregoing problem, embodiments of this application provide a multicast/broadcast communication method. In the method, an MB-SMF network element may be discovered based on information about a current MBS service area, or based on information about a current MBS service area and an MBS session identifier, so that the discovered MB-SMF network element can serve the current MBS service area.

The following describes implementations of embodiments of this application in detail with reference to the accompanying drawings.

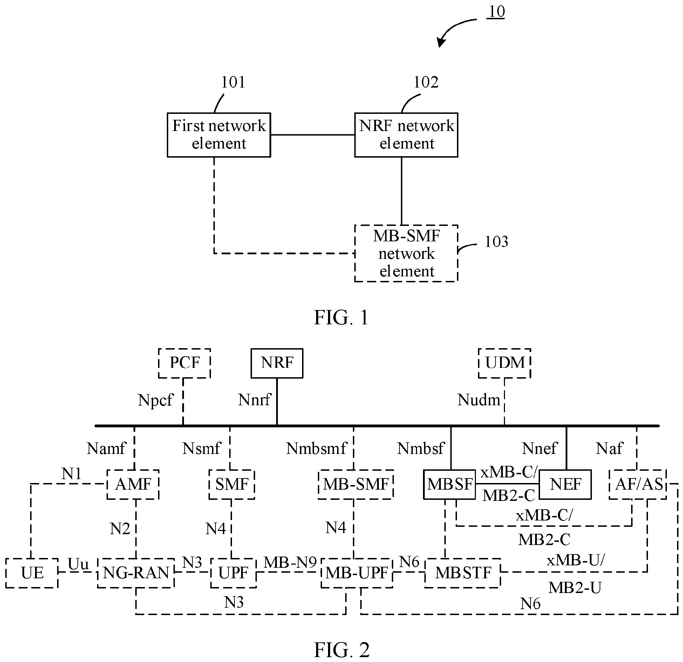

The method provided in embodiments of this application may be applied to various communication systems. For example, the communication system may be a long term evolution (long term evolution, LTE) system, a 5G communication system, a Wi-Fi system, a communication system related to the 3rd Generation Partnership Project (3rd generation partnership project, 3GPP), a future evolved communication system, or a system integrating a plurality of systems. This is not limited. 5G may also be referred to as new radio (new radio, NR). The following uses a communication system 10 shown in FIG. 1 as an example to describe the method provided in embodiments of this application.

FIG. 1 is a schematic diagram of an architecture of a communication system 10 according to an embodiment of this application. In FIG. 1, the communication system 10 may include a first network element 101 and an NRF network element 102 communicatively connected to the first network element 101. The first network element 101 may be an NEF network element, an MBSF network element, or an AF network element. Optionally, the communication system 10 further includes an MB-SMF network element 103 communicatively connected to the first network element 101 and the NRF network element 102. FIG. 1 is merely a schematic diagram, and does not constitute a limitation on an applicable scenario of technical solutions provided in this application.

In some embodiments, the first network element 101 may receive first information from an AF network element, and determine a target MB-SMF network element based on the first information. The first information may include a first identifier of a first MBS session and information about an MBS service area, and the first MBS session may be for transmitting data to the MBS service area. The target MB-SMF network element may support the MBS service area, and the target MB-SMF network element may be configured to create the first MBS session.

The NRF network element 102 may receive a first request message from the first network element 101, and send a first response message to the first network element 101. The first request message may request to discover an MB-SMF network element. The first request message may include the first information. The first response message may include information about at least one MB-SMF network element. The at least one MB-SMF network element meets at least one of the following: supporting the MBS service area but not supporting the first identifier, supporting both the MBS service area and the first identifier, or supporting the first identifier but not supporting the MBS service area.

The MB-SMF network element 103 may receive a third message from the first network element 101, and send a first update message to the NRF network element 102. The third message includes the first identifier of the first MBS session, and the first identifier may be used by the MB-SMF network element 103 to update the first identifier to a profile of the MB-SMF network element 103. The first update message includes the first identifier. The first update message may trigger storing the first identifier in the profile as a serving MBS session identifier.

In the foregoing embodiment, the first network element 101 is an NEF/MBSF network element. In addition to the NEF/MB SF network element, an AF network element may alternatively trigger the NRF network element 102 to discover an MB-SMF network element. In other words, the foregoing first request message may alternatively be sent by the AF network element. To be specific, the AF network element may send the first request message to the NRF network element 102. After receiving the first request message, the NRF network element 102 sends the first response message to the AF network element. Similarly, in addition to the NEF/MBSF network element, the AF network element may alternatively trigger the MB-SMF network element 103 to update the first identifier to the profile of the MB-SMF network element 103. To be specific, the AF network element may send the third message to the MB-SMF network element 103.

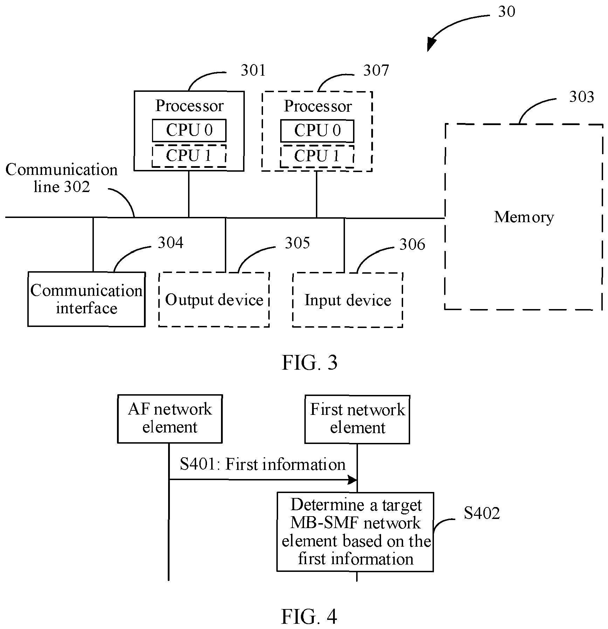

In the foregoing embodiment, the first network element 101 may determine the target MB-SMF network element based on the information about the MBS service area and the first identifier of the first MBS session, so that the target MB-SMF network element can serve the MBS service area. A specific process of the foregoing method is described in the following embodiment shown in FIG. 4, and details are not described herein.

In some other embodiments, the first network element 101 can receive a fourth request message from the AF network element, send a fifth request message to the NRF network element 102, and receive, from the NRF network element 102, a response message of the fifth request message. The fourth request message may request to allocate an identifier of an MBS session, and the fourth request message may include the information about the MBS service area. The fifth request message may request the NRF network element 102 to discover an MB-SMF network element, and the fifth request message may include the information about the MBS service area. The response message of the fifth request message may include information about the target MB-SMF network element, the target MB-SMF network element may support the MBS service area, and the target MB-SMF network element may be configured to create an MBS session.

The NRF network element 102 may receive the fifth request message from the first network element 101, and send the response message of the fifth request message to the first network element 101.

The MB-SMF network element 103 may receive a sixth request message from the first network element 101, allocate a third identifier to the MBS session based on the sixth request message, and send the third identifier to the first network element 101. The sixth request message may trigger the MB-SMF network element 103 to allocate an MBS session identifier to the MBS session, and the sixth request message may include the information about the MBS service area. The third identifier may identify the MBS session, and the MBS session may be for transmitting data to the MBS service area.

In the foregoing embodiment, the first network element 101 is an NEF/MBSF network element. In addition to the NEF/MB SF network element, an AF network element may alternatively trigger the NRF network element 102 to discover an MB-SMF network element. In other words, the foregoing fifth request message may alternatively be sent by the AF network element. To be specific, the AF network element may send the fifth request message to the NRF network element 102. After receiving the fifth request message, the NRF network element 102 sends the response message of the fifth request message to the AF network element. Similarly, in addition to the NEF/MBSF network element, the AF network element may alternatively trigger the MB-SMF network element 103 to allocate an MBS session identifier to the MBS session. To be specific, the AF network element may send the sixth request message to the MB-SMF network element 103. After receiving the sixth request message, the MB-SMF network element 103 may send the third identifier to the AF network element.

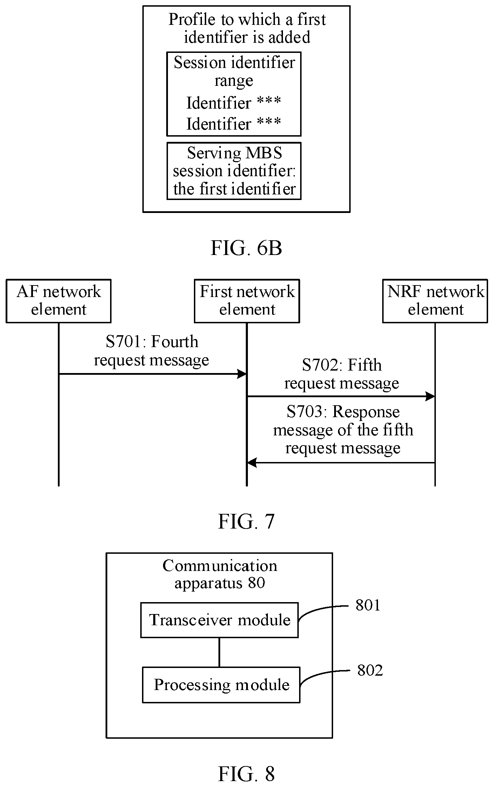

In the foregoing embodiment, the NRF network element 102 may discover the target MB-SMF network element based on the information about the MBS service area, so that the target MB-SMF network element can serve the MBS service area. A specific process of the foregoing method is described in the following embodiment shown in FIG. 7, and details are not described herein.

The communication system 10 shown in FIG. 1 is merely used as an example, but is not intended to limit the technical solutions in this application. A person skilled in the art should understand that, in a specific implementation process, the communication system 10 may further include another network element, and a quantity of first network elements, NRF network elements, or MB-SMF network elements may alternatively be determined based on a specific requirement. This is not limited.

Optionally, the foregoing communication system 10 is applicable to a 5G network currently being discussed, or is applicable to another future network, or the like. This is not specifically limited in embodiments of this application.

For example, if the communication system 10 is applicable to a currently discussed 5G broadcast/groupcast architecture, a network element or an entity corresponding to the foregoing first network element 101 may be an NEF network element or an MBSF network element in the 5G broadcast/groupcast architecture shown in FIG. 2. A network element or an entity corresponding to the foregoing NRF network element 102 may be an NRF network element in the 5G broadcast/groupcast architecture shown in FIG. 2. A network element or an entity corresponding to the foregoing MB-SMF network element 103 may be an MB-SMF network element in the 5G broadcast/groupcast architecture shown in FIG. 2.

In addition, as shown in FIG. 2, the 5G broadcast/groupcast architecture may further include a policy control function (policy control function, PCF) network element, a unified data management (unified data management, UDM) network element, an AMF network element, an SMF network element, an AF network element/application server (application server, AS), UE, a next generation radio access node (next generation radio access node, NG-RAN node), a user plane function (user plane function, UPF) network element, an MB-UPF network element, and an MBSTF network element.

As shown in FIG. 2, the UE communicates with an NG-RAN device and accesses a 5G network through a Uu interface (which is referred to as Uu for short). The UE communicates with the AMF network element through an N1 interface (which is referred to as N1 for short). The NG-RAN device communicates with the AMF network element through an N2 interface (which is referred to as N2 for short). The NG-RAN device communicates with the UPF network element through an N3 interface (which is referred to as N3 for short). The SMF network element communicates with the UPF network element through an N4 interface (which is referred to as N4 for short). The UPF network element communicates with the MB-UPF network element through an MB-N9 interface (which is referred to as MB-N9 for short). The MB-SMF network element communicates with the MB-UPF network element through the N4 interface, the MB-UPF network element communicates with the NG-RAN device through the N3 interface, the MB-UPF network element communicates with the AF network element/AS through an N6 interface (which is referred to as N6 for short), and the MB-UPF network element further communicates with the MBSTF network element through the N6 interface. The MBSTF network element communicates with the AF network element/AS through an xMB-U/MB2-U interface (which is referred to as xMB-U/MB2-U for short), and the MBSTF network element may further communicate with the MBSF network element. The MBSF network element communicates with the NEF network element through an xMB-C/MB2-C interface (which is referred to as xMB-C/MB2-C for short), and the MBSF network element further communicates with the AF network element/AS through the xMB-C/MB2-C interface. In addition, the control plane functions shown in FIG. 2, such as a PCF network element, the NRF network element, a UDM network element, the AMF network element, the SMF network element, the MB-SMF network element, the MBSF network element, the NEF network element, or the AF network element/AS interact with each other through a service-based interface. For example, an service-based interface exhibited by the PCF network element is Npcf; a service-based interface exhibited by the NRF network element is Nnrf; a service-based interface exhibited by the UDM network element is Nudm; a service-based interface exhibited by the AMF network element is Namf; a service-based interface exhibited by the SMF network element is Nsmf; a service-based interface exhibited by the MB-SMF network element is Nmbsmf; a service-based interface exhibited by the MBSF network element is Nmbsf; a service-based interface exhibited by the NEF network element is Nnef; and a service-based interface exhibited by the AF network element/AS is Naf.

Optionally, the network element or device (for example, the first network element, the NRF network element, or the MB-SMF network element) in FIG. 1 or FIG. 2 in embodiments of this application may also be referred to as a communication apparatus, and may be a general-purpose device or a dedicated device. This is not specifically limited in embodiments of this application.

Optionally, a related function of the network element or device (for example, the first network element, the NRF network element, or the MB-SMF network element) in FIG. 1 or FIG. 2 in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

During specific implementation, the network element or device (for example, the first network element, the NRF network element, or the MB-SMF network element) in FIG. 1 or FIG. 2 may use a composition structure shown in FIG. 3, or include components shown in FIG. 3. FIG. 3 is a schematic diagram of a hardware structure of a communication apparatus that is applicable to an embodiment of this application. The communication apparatus 30 includes at least one processor 301 and at least one communication interface 304, and is configured to implement the method provided in embodiments of this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information among the foregoing components, for example, a bus.

The communication interface 304 is configured to communicate with another device or a communication network. The communication interface 304 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be a read-only memory (read-only memory, ROM) or another type of static storage device that can store static information and instructions; or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Bluray disc, or the like) and magnetic disk storage medium, another magnetic storage device, or any other medium that can be configured to carry or store expected program code in a form of instructions or a data structure and that is accessible by a computer, but is not limited thereto. The memory may exist independently, and is coupled to the processor 301 via the communication line 302. The memory 303 may alternatively be integrated with the processor 301. The memory provided in embodiments of this application may be usually non-volatile.

The memory 303 is configured to store computer-executable instructions for performing the solutions provided in embodiments of this application, and the processor 301 controls execution of the computer-executable instructions. The processor 301 is configured to execute the computer-executable instructions stored in the memory 303, to implement the method provided in embodiments of this application. Alternatively, optionally, in embodiments of this application, the processor 301 may perform processing-related functions in a method provided in the following embodiment of this application, and the communication interface 304 is responsible for communication with another device or a communication network. This is not specifically limited in embodiments of this application.

Optionally, the computer-executable instructions in this embodiment of this application may also be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive input of a user in a plurality of manners. For example, the input device 306 may be a mouse, a keyboard, a touchscreen device, or a sensing device.

It may be understood that, the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the method provided in embodiments of this application with reference to the accompanying drawings. Each network element in the following embodiments may have the components shown in FIG. 3. Details are not described again.

It may be understood that, in the following embodiments of this application, a name of a message between each network element or a name or the like of each parameter in the message is merely an example, and may also be another name in specific implementation. This is not specifically limited in embodiments of this application.

It may be understood that, in embodiments of this application, "/" may represent an "or" relationship between associated objects. For example, A/B may represent A or B. "And/or" may be used to describe three relationships between associated objects. For example, A and/or B may represent the following three cases: Only A exists, both A and B exist, and only B exists. A and B may be singular or plural. In addition, a representation similar to "at least one of A, B, and C" or "at least one of A, B, or C" is usually used to represent any one of the following: only A exists; only B exists; only C exists; both A and B exist; both A and C exist; both B and C exist; and A, B, and C all exist. The foregoing uses three elements A, B, and C as an example to describe optional items of this project. When there are more elements in a representation, a meaning of the representation may be obtained based on the foregoing rules.

To facilitate description of the technical solutions in embodiments of this application, a term such as "first" and "second" may be used to distinguish between technical features having same or similar functions. The term such as "first" and "second" do not limit a number and an execution sequence, and the term such as "first" and "second" do not indicate a definite difference. In embodiments of this application, a term such as "example" or "for example" is used to indicate an example, an illustration, or descriptions. Any embodiment or design scheme described as an "example" or "for example" should not be explained as being more preferred or having more advantages than another embodiment or design scheme. Use of the term such as "example" or "for example" is intended to present a relative concept in a specific manner for ease of understanding.

It may be understood that "an embodiment" mentioned in the entire specification means that particular features, structures, or characteristics related to the embodiment are included in at least one embodiment of this application. Therefore, each embodiment in the entire specification does not necessarily refer to a same embodiment. In addition, these particular features, structures, or characteristics may be combined in one or more embodiments by using any appropriate manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be understood that, in this application, "when" and "if" mean that corresponding processing is performed in an objective situation, and are not intended to limit time. The terms do not mean that a determining action is required during implementation, and do not mean any other limitation.

"Simultaneously" in this application may be understood as being at a same time point, may be understood as being within a time period, or may be understood as being within a same periodicity.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with another feature based on a requirement. Correspondingly, the apparatus provided in embodiments of this application may also correspondingly implement these features or functions. Details are not described herein.

It may be understood that a same step or a step or technical feature having a same function in embodiments of this application may be mutually referenced in different embodiments.

It may be understood that, in embodiments of this application, a first network element and/or an NRF network element and/or an MB-SMF network element may perform a part or all of steps in embodiments of this application. The steps are merely examples. In embodiments of this application, other steps or variations of various steps may alternatively be performed. In addition, the steps may be performed in a sequence different from a sequence presented in embodiments of this application, and not all the steps in embodiments of this application need to be performed.

In embodiments of this application, an apparatus configured to implement functions of a first network element may be a first network element, or may be an apparatus that can support the first network element in implementing the functions, for example, a chip system. The apparatus may be disposed in the first network element or used in a matching manner with the first network element. An apparatus configured to implement functions of an NRF network element may be an NRF network element, or may be an apparatus that can support the NRF network element in implementing the functions, for example, a chip system. The apparatus may be disposed in the NRF network element or used in a matching manner with the NRF network element. An apparatus configured to implement functions of an MB-SMF network element may be an MB-SMF network element, or may be an apparatus that can support the MB-SMF network element in implementing the functions, for example, a chip system. The apparatus may be disposed in the MB-SMF network element or used in a matching manner with the MB-SMF network element. In embodiments of this application, the chip system may include a chip, or may include a chip and another discrete component. An example in which an apparatus configured to implement functions of a first network element is a first network element, an apparatus configured to implement functions of an NRF network element is an NRF network element, and an apparatus configured to implement functions of an MB-SMF network element is an MB-SMF network element is used to describe the method provided in embodiments of this application.

FIG. 4 shows a multicast/broadcast communication method according to an embodiment of this application. The multicast/broadcast communication method may include the following steps.

S401: An AF network element sends first information to a first network element. Correspondingly, the first network element receives the first information from the AF network element.

The communication system 10 shown in FIG. 1 is used as an example. The first network element in S401 may be the first network element 101 in FIG. 1. The 5G broadcast/groupcast architecture shown in FIG. 2 is used as an example. The first network element in S401 may be the NEF network element or the MBSF network element in FIG. 2. The AF network element in S401 may be the AF network element/AS in FIG. 2.

In this embodiment of this application, the first information may include a first identifier of a first MBS session and information about an MBS service area. The first identifier may be a TMGI. For descriptions of the information about the MBS service area, refer to the descriptions in S4.6. The first MBS session may be for transmitting data to the MBS service area. In an example, the first information is included in an MBS session creation request (for example, Nnef_MBSSession_Create request) message.

It may be understood that, when S401 is performed, the first MBS session has not been created, in other words, the first MBS session is a to-be-created session.

Optionally, before S401, a procedure of allocating an MBS session identifier has been performed, and the first identifier is an identifier allocated in the procedure of allocating an MBS session identifier. Alternatively, the first identifier is locally obtained by the AF network element. For example, the AF network element stores a plurality of MBS session identifiers, and the AF network element selects an identifier from the plurality of MBS session identifiers as the first identifier. The AF network element may obtain the first identifier from an operator in an offline manner and locally store the first identifier.

S402. The first network element determines a target MB-SMF network element based on the first information.

The communication system 10 shown in FIG. 1 is used as an example. The target MB-SMF network element in S402 may be the MB-SMF network element 103 in FIG. 1. The 5G broadcast/groupcast architecture shown in FIG. 2 is used as an example. The target MB-SMF network element in S402 may be the MB-SMF network element in FIG. 2.

In this embodiment of this application, the target MB-SMF network element may support the MBS service area. The target MB-SMF network element may be configured to create the first MBS session. In other words, after S402, the target MB-SMF network element can create the first MBS session. For details, refer to corresponding descriptions in S5.4 to S5.8. The MB-SMF network element 2 in S5.4 to S5.8 may be replaced with the target MB-SMF network element. Optionally, the target MB-SMF network element further supports the first identifier.

In this embodiment of this application, that an MB-SMF network element supports the MBS service area may be understood as that a service area corresponding to the MB-SMF network element overlaps the MBS service area. The service area corresponding to the MB-SMF network element is an area that can be served by the MB-SMF, and may be a group of cell identifiers and/or a group of TAIs. For example, the service area corresponding to the MB-SMF network element includes a cell 1, a cell 2, and a cell 3. If the MBS service area includes the cell 1, the cell 2, and the cell 3, or the MBS service area includes the cell 1 and the cell 3, the MB-SMF network element supports the MBS service area. If the MBS service area includes a cell 4, a cell 5, and a cell 6, the MB-SMF network element does not support the MBS service area. For example, the MBS service area includes a TAI 1, a TAI 2, and a TAI 4. If the service area corresponding to the MB-SMF network element includes the TAI 1, the TAI 2, and the TAI 3, the MB-SMF network element supports the MBS service area. If the service area corresponding to the MB-SMF network element includes a TAI 5 and a TAI 6, the MB-SMF network element does not support the MBS service area. Unified descriptions are provided herein, and details are not described below.

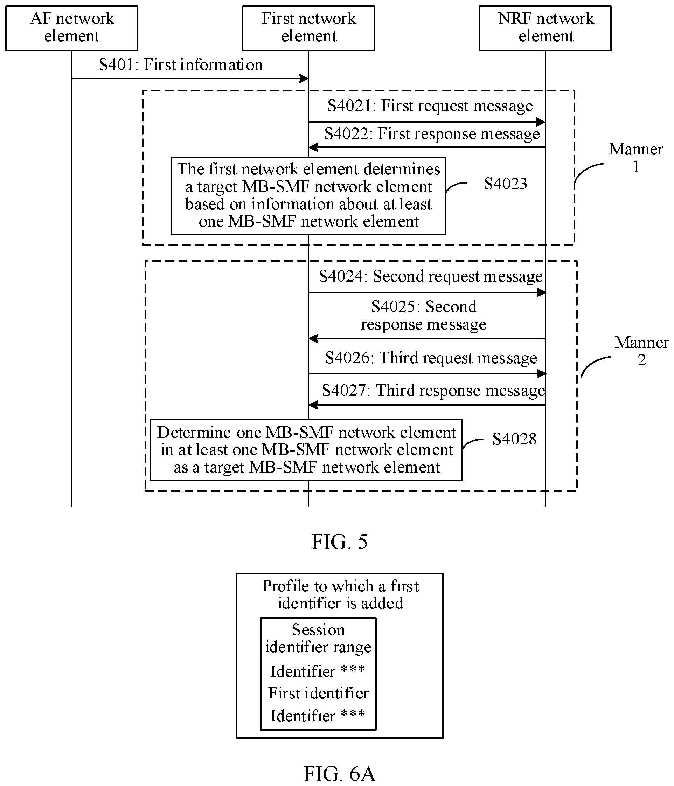

In a possible implementation, as shown in FIG. 5, the first network element may determine the target MB-SMF network element in at least a manner 1 or a manner 2.

In the manner 1, the first network element may simultaneously send the first identifier and the information about the MBS service area to an NRF network element, so that the NRF network element may discover an MB-SMF based on the first identifier and/or the information about the MBS service area, and indicate, to the first network element, at least one MB-SMF network element that meets at least one of the following: supporting the MBS service area but not supporting the first identifier, supporting both the MBS service area and the first identifier, or supporting the first identifier but not supporting the MBS service area. In this way, the first network element may determine an MB-SMF network element supporting the MBS service area but not supporting the first identifier, or an MB-SMF network element supporting both the MBS service area and the first identifier as the target MB-SMF network element, so that the target MB-SMF network element can provide an AF network element with an MBS session service that meets the MBS service area. For a specific process of the manner 1, refer to the following descriptions in S4021 to S4023.

In the manner 2, the first network element may first send the first identifier to the NRF network element, so that the NRF network element can discover, based on the first identifier, an MB-SMF network element supporting the first identifier. If the MB-SMF network element also supports the MBS service area, the first network element may determine the MB-SMF network element as the target MB-SMF network element. If the MB-SMF network element does not support the MBS service area, the first network element may send the information about the MBS service area to the NRF network element, so that the NRF network element can discover, based on the information about the MBS service area, at least one MB-SMF network element supporting the MBS service area. The first network element may determine the target MB-SMF network element in the at least one MB-SMF network element. When the first network element sends the MBS service area to the NRF network element, and the service area is a group of TAI lists, the first network element may perform discovery querying once when sending one TAI to the NRF network element each time, and then perform discovery querying for a plurality of times until all TAIs are traversed. Alternatively, the first network element may send all TAIs in a group of TAIs to the NRF network element at a time, to perform discovery querying once. For a specific process of the manner 2, refer to the following descriptions in S4024 to S4028.

In this embodiment of this application, that an MB-SMF network element supports an MBS session identifier may be understood as that a session identifier range (for example, a TMGI range) corresponding to the MB-SMF network element includes the MBS session identifier. The session identifier range may be included in a profile of the MB-SMF network element. For example, the session identifier range corresponding to the MB-SMF network element includes a TMGI 1 to a TMGI 10. If the MBS session identifier is the TMGI 1, the MB-SMF network element supports the MBS session identifier. If the MBS session identifier is a TMGI 11, the MB-SMF network element does not support the MBS session identifier. That an MB-SMF network element supports an MBS session identifier may alternatively be understood as that the MB-SMF network element dynamically generates the MBS session identifier, but the identifier does not exist in a profile of the MB-SMF network element before. Unified descriptions are provided herein, and details are not described below.

First, the manner 1 is specifically described.

S4021: The first network element sends a first request message to the NRF network element. Correspondingly, the NRF network element receives the first request message from the first network element.

In this embodiment of this application, the first request message may request the NRF network element to discover an MB-SMF network element. For example, the first request message is a network function (network function, NF) discovery request (NF discovery request) message. The first request message may include the first information.

It may be understood that, after receiving the first request message, the NRF network element may discover an MB-SMF network element based on the first identifier and/or the information about the MBS service area.

For example, if the NRF network element discovers an MB-SMF network element based on the first identifier, the NRF network element may discover, in a plurality of MB-SMF network elements registered with the NRF network element, an MB-SMF network element whose session identifier range includes the first identifier. For example, the NRF network element discovers an MB-SMF network element supporting both the first identifier and the MBS service area, or an MB-SMF network element supporting the first identifier but not supporting the MBS service area.

For example, if the NRF network element discovers an MB-SMF network element based on the information about the MBS service area, the NRF network element may discover, in a plurality of MB-SMF network elements registered with the NRF network element, an MB-SMF network element whose service area overlaps the MBS service area. For example, the NRF network element discovers an MB-SMF network element supporting both the MBS service area and the first identifier, or an MB-SMF network element supporting the MBS service area but not supporting the first identifier.

For example, if the NRF network element discovers an MB-SMF network element based on the first identifier and the information about the MBS service area, the NRF network element may discover, in a plurality of MB-SMF network elements registered with the NRF network element, an MB-SMF network element whose session identifier range includes the first identifier, and/or an MB-SMF network element whose service area overlaps the MBS service area. For example, the NRF network element discovers an MB-SMF network element supporting both the first identifier and the MBS service area. Alternatively, the NRF network element discovers an MB-SMF network element supporting the first identifier but not supporting the MBS service area, and/or an MB-SMF network element supporting the MBS service area but not supporting the first identifier.

Optionally, the first request message further includes preference information. The preference information may trigger preferential discovery of an MB-SMF network element supporting the MBS service area. For example, the preference information includes indication information of preference of the MBS service area, and the indication information is 1 bit. When a value of the indication information is "0" or "1", the indication information may trigger preferential discovery of an MB-SMF network element supporting the MBS service area. In this case, the NRF network element preferentially discovers an MB-SMF network element supporting the MBS service area. For example, an MB-SMF network element discovered by the NRF network element meets at least one of the following: supporting the MBS service area but not supporting the first identifier, or supporting both the MBS service area and the first identifier.

S4022: The NRF network element sends a first response message to the first network element. Correspondingly, the first network element receives the first response message from the NRF network element.

In this embodiment of this application, the first response message may be a response message of an NF discovery request message. The first response message may include information about at least one MB-SMF network element. The at least one MB-SMF network element may meet at least one of the following: supporting the MBS service area but not supporting the first identifier, supporting both the MBS service area and the first identifier, or supporting the first identifier but not supporting the MBS service area. It may be understood that the at least one MB-SMF network element includes all or a part of MB-SMF network elements discovered by the NRF network element.

In a possible implementation, the information about the at least one MB-SMF network element may include an identifier of the at least one MB-SMF network element and/or an address (for example, an IP address) of the at least one MB-SMF network element. Optionally, the information about the at least one MB-SMF network element further includes a session identifier range corresponding to the at least one MB-SMF network element, and/or information about a service area of the at least one MB-SMF network element, and/or an MBS service area supported by the at least one MB-SMF network element (the supported MBS service area may be a part or all of the MBS service area carried in the first request message). An MBS service area supported by one MB-SMF network element may include an overlapping area between a service area of the MB-SMF network element and the MBS service area. For example, the service area of the MB-SMF network element includes a cell 1, a cell 2, and a cell 3, and the MBS service area includes the cell 2, the cell 3, and a cell 4. The MBS service area supported by the MB-SMF network element includes the cell 2 and the cell 3.

For example, if the at least one MB-SMF network element meets at least one of the following: supporting the MBS service area but not supporting the first identifier, or supporting both the MBS service area and the first identifier, the information about the at least one MB-SMF network element includes the identifier of the at least one MB-SMF network element and/or the address of the at least one MB-SMF network element. Optionally, the information about the at least one MB-SMF network element further includes the session identifier range corresponding to the at least one MB-SMF network element, and/or the information about the service area of the at least one MB-SMF network element, and/or the MBS service area supported by the at least one MB-SMF network element.

For example, if the at least one MB-SMF network element meets at least one of the following: supporting the MBS service area but not supporting the first identifier, or supporting the first identifier but not supporting the MBS service area, the information about the at least one MB-SMF network element includes the identifier of the at least one MB-SMF network element and/or the address of the at least one MB-SMF network element, the session identifier range corresponding to the at least one MB-SMF network element, and the information about the service area of the at least one MB-SMF network element. Alternatively, the information about the at least one MB-SMF network element includes the identifier of the at least one MB-SMF network element and/or the address of the at least one MB-SMF network element, and the MBS service area supported by the at least one MB-SMF network element. Alternatively, the information about the at least one MB-SMF network element includes the identifier of the at least one MB-SMF network element and/or the address of the at least one MB-SMF network element, the session identifier range corresponding to the at least one MB-SMF network element, the information about the service area of the at least one MB-SMF network element, and the MBS service area supported by the at least one MB-SMF network element. In this way, the first network element can determine whether the at least one MB-SMF network element supports the first identifier, or determine whether the at least one MB-SMF network element supports the MBS service area.

In a possible design, for an MB-SMF network element supporting the first identifier, the information about the at least one MB-SMF network element may include a session identifier range corresponding to the MB-SMF network element, so that the first network element determines that the MB-SMF network element supports the first identifier. Alternatively, for an MB-SMF network element not supporting the first identifier, the information about the at least one MB-SMF network element may include a session identifier range corresponding to the MB-SMF network element, so that the first network element determines that the MB-SMF network element does not support the first identifier. For an MB-SMF network element supporting the MBS service area, the information about the at least one MB-SMF network element may include a service area of the MB-SMF network element and/or the MBS service area supported by the at least one MB-SMF network element, so that the first network element determines that the MB-SMF network element supports the MBS service area. Alternatively, for an MB-SMF network element not supporting the MBS service area, the information about the at least one MB-SMF network element may include a service area of the MB-SMF network element, so that the first network element determines that the MB-SMF network element does not support the MBS service area.

For example, the at least one MB-SMF network element includes an MB-SMF network element 1 and an MB-SMF network element 2, the MB-SMF network element 1 supports the MBS service area but does not support the first identifier, and the MB-SMF network element 2 supports the first identifier but does not support the MBS service area. The information about the at least one MB-SMF network element includes an identifier of the MB-SMF network element 1, a session identifier range corresponding to the MB-SMF network element 1, an identifier of the MB-SMF network element 2, and information about a service area of the MB-SMF network element 2, so that the first network element determines that the MB-SMF network element 1 supports the MBS service area but does not support the first identifier, and the MB-SMF network element 2 supports the first identifier but does not support the MBS service area. Alternatively, the information about the at least one MB-SMF network element includes an address of the MB-SMF network element 1, information about a service area of the MB-SMF network element 1, an address of the MB-SMF network element 2, and a session identifier range corresponding to the MB-SMF network element 2, so that the first network element determines that the MB-SMF network element 1 supports the MBS service area but does not support the first identifier, and the MB-SMF network element 2 supports the first identifier but does not support the MBS service area.

S4023. The first network element determines the target MB-SMF network element based on the information about the at least one MB-SMF network element.

In a possible implementation, if the at least one MB-SMF network element includes one MB-SMF network element, the first network element determines the MB-SMF network element as the target MB-SMF network element. If the at least one MB-SMF network element includes a plurality of MB-SMF network elements, the first network element determines the target MB-SMF network element in the plurality of MB-SMF network elements.

In a possible design, the first network element determines the target MB-SMF network element in the plurality of MB-SMF network elements based on a preset policy.

In an example, the first network element randomly determines the target MB-SMF network element in the plurality of MB-SMF network elements.

In another example, the first network element preferentially determines an MB-SMF network element supporting the MBS service area as the target MB-SMF network element. For example, if the at least one MB-SMF network element includes an MB-SMF network element 1 supporting the MBS service area but not supporting the first identifier, an MB-SMF network element 2 supporting both the MBS service area and the first identifier, and an MB-SMF network element 3 supporting the first identifier but not supporting the MBS service area, the first network element determines the MB-SMF network element 1 or the MB-SMF network element 2 as the target MB-SMF network element. For another example, if the at least one MB-SMF network element includes an MB-SMF network element 1 supporting the MBS service area but not supporting the first identifier and an MB-SMF network element 2 supporting both the MBS service area and the first identifier, the first network element determines the MB-SMF network element 2 as the target MB-SMF network element. For still another example, if the at least one MB-SMF network element includes an MB-SMF network element 1 supporting the MBS service area but not supporting the first identifier and an MB-SMF network element 3 supporting the first identifier but not supporting the MBS service area, the first network element determines the MB-SMF network element 1 as the target MB-SMF network element.

Optionally, in the manner 1, if the target MB-SMF network element does not support the first identifier, and the at least one MB-SMF network element includes a first MB-SMF network element supporting the first identifier but not supporting the MBS service area, the first network element may send a first message to the first MB-SMF network element. The first message may trigger the first MB-SMF network element to disassociate the first identifier from the first MB-SMF network element. For example, the first message includes the first identifier. Optionally, the first message may further include one-bit information. When a value of the one-bit information is "0" or "1", the first MB-SMF network element is triggered to disassociate the first identifier from the first MB-SMF network element. It may be understood that the first MB-SMF network element cannot serve the MBS service area. As a result, the first identifier is dissociated from the first MB-SMF network element, so that when an MB-SMF network element is subsequently discovered based on the first identifier, the first MB-SMF network element is not found.

It may be understood that, after receiving the first message, the first MB-SMF network element may send a second update message to the NRF network element. The second update message may trigger disassociating the first identifier from the first MB-SMF network element. For example, the second update message may include one-bit information. When a value of the one-bit information is "0" or " 1", disassociating the first identifier from the first MB-SMF network element is triggered. After receiving the second update message, the NRF network element disassociates the first identifier from the first MB-SMF network element based on the second update message.

In this embodiment of this application, the disassociating the first identifier from the first MB-SMF network element may be understood as: deleting the first identifier from a session identifier range corresponding to the first MB-SMF network element, or setting the first identifier in a session identifier range included in a profile of the first MB-SMF network element to an invalid session identifier or an unavailable session identifier, or when the first MB-SMF network element subsequently allocates an MBS session identifier, skipping allocating the first identifier.

In an example, that the NRF network element disassociates the first identifier from the first MB-SMF network element based on the second update message includes: The NRF network element deletes the first identifier from the session identifier range included in the profile of the first MB-SMF network element; or the NRF network element sets the first identifier in the session identifier range included in the profile of the first MB-SMF network element to an invalid session identifier or an unavailable session identifier.

The manner 2 is specifically described below.

S4024: The first network element sends a second request message to the NRF network element. Correspondingly, the NRF network element receives the second request message from the first network element.

In this embodiment of this application, the second request message may request the NRF network element to discover an MB-SMF network element. The second request message may be an NF discovery request message. The second request message may include the first identifier.

It may be understood that, after receiving the second request message, the NRF network element may discover an MB-SMF network element based on the first identifier. The MB-SMF network element discovered by the NRF network element supports the first identifier.

S4025: The NRF network element sends a second response message to the first network element. Correspondingly, the first network element receives the second response message from the NRF network element.

In this embodiment of this application, the second response message may be a response message of the NF discovery request message. The second response message includes information about a first MB-SMF network element. The first MB-SMF network element supports the first identifier. The information about the first MB-SMF network element may include an identifier of the first MB-SMF network element, and/or an address of the first MB-SMF network element (for example, an IP address of the first MB-SMF network element), information about a service area of the first MB-SMF network element, and/or an MBS service area supported by at least one MB-SMF network element. In this way, the first network element can determine, based on the information about the service area of the first MB-SMF network element and/or the MBS service area supported by the at least one MB-SMF network element, whether the first MB-SMF network element supports the MBS service area. Optionally, the information about the first MB-SMF network element further includes a session identifier range corresponding to the first MB-SMF network element.

It may be understood that, if the first MB-SMF network element supports the MBS service area, the first network element determines the first MB-SMF network element as the target MB-SMF network element. If the first MB-SMF network element does not support the MBS service area, the first network element may continue to request the NRF network element to discover an MB-SMF network element. For example, the first network element performs the following S4026.

Optionally, if the first MB-SMF network element does not support the MBS service area, the first network element may send a first message to the first MB-SMF network element. The first message may trigger the first MB-SMF network element to disassociate the first identifier from the first MB-SMF network element. It may be understood that the first MB-SMF network element cannot serve the MBS service area. As a result, the first identifier is dissociated from the first MB-SMF network element, so that when an MB-SMF network element is subsequently discovered based on the first identifier, the first MB-SMF network element is not found.

It may be understood that, after receiving the first message, the first MB-SMF network element may send a second update message to the NRF network element. The second update message may trigger disassociating the first identifier from the first MB-SMF network element. After receiving the second update message, the NRF network element disassociates the first identifier from the first MB-SMF network element based on the second update message. For example, the NRF network element deletes the first identifier from a session identifier range included in a profile of the first MB-SMF network element; or the NRF network element sets the first identifier in the session identifier range included in the profile of the first MB-SMF network element to an invalid session identifier or an unavailable session identifier.

S4026: The first network element sends a third request message to the NRF network element. Correspondingly, the NRF network element receives the third request message from the first network element.

In this embodiment of this application, the third request message may request the NRF network element to discover an MB-SMF network element. The third request message may be an NF discovery request message. The third request message may include the information about the MBS service area.

It may be understood that, after receiving the third request message, the NRF network element may discover an MB-SMF network element based on the information about the MBS service area. The MB-SMF network element discovered by the NRF network element supports the MBS service area but does not support the first identifier.

S4027: The NRF network element sends a third response message to the first network element. Correspondingly, the first network element receives the third response message from the NRF network element.

In this embodiment of this application, the third response message may be a response message of the NF discovery request message. The third response message may include information about at least one MB-SMF network element. The at least one MB-SMF network element supports the MBS service area but does not support the first identifier. It may be understood that the at least one MB-SMF network element includes all or a part of MB-SMF network elements discovered by the NRF network element.

In a possible implementation, the information about the at least one MB-SMF network element may include an identifier of the at least one MB-SMF network element and/or an address (for example, an IP address) of the at least one MB-SMF network element. Optionally, the information about the at least one MB-SMF network element further includes a session identifier range corresponding to the at least one MB-SMF network element, and/or information about a service area of the at least one MB-SMF network element, and/or the MBS service area supported by the at least one MB-SMF network element.

S4028. The first network element determines one MB-SMF network element in the at least one MB-SMF network element as the target MB-SMF network element.

In a possible implementation, if the at least one MB-SMF network element includes one MB-SMF network element, the first network element determines the MB-SMF network element as the target MB-SMF network element. If the at least one MB-SMF network element includes a plurality of MB-SMF network elements, the first network element determines the target MB-SMF network element in the plurality of MB-SMF network elements.

In a possible design, the first network element determines the target MB-SMF network element in the plurality of MB-SMF network elements based on a preset policy. For example, the first network element randomly determines the target MB-SMF network element in the plurality of MB-SMF network elements. For another example, the first network element determines, as the target MB-SMF network element, an MB-SMF network element with a largest quantity of available session identifiers in the plurality of MB-SMF network elements.

It may be understood that, in the manner 1 or the manner 2, the first network element discovers an MB-SMF network element by using the NRF network element. If the first network element supports caching information about an MB-SMF network element, the first network element may locally discover an MB-SMF network element based on the first identifier and/or the information about the MBS service area, and does not need to discover an MB-SMF network element by using the NRF network element. A process in which the first network element locally discovers an MB-SMF network element based on the first identifier and/or the information about the MBS service area is similar to a process in which the NRF network element discovers an MB-SMF network element based on the first identifier and/or the information about the MBS service area. For details, refer to corresponding descriptions in the manner 1 and the manner 2. Details are not described herein again.

Optionally, after S402, the first network element sends a third message to the target MB-SMF network element. The third message includes the first identifier, and the first identifier may be used by the target MB-SMF network element to update the first identifier to a profile of the target MB-SMF network element. In this way, the first identifier can be associated with the target MB-SMF network element. Subsequently, when an MB-SMF network element is discovered based on the first identifier, the target MB-SMF network element can be discovered. The third message may be an MBS session creation request (Nmbsmf_MBSSession_Create Request).

In a possible implementation, after receiving the third message, the target MB-SMF network element sends a first update message to the NRF network element. The first update message includes the first identifier. The first update message may trigger updating the first identifier to the profile of the target MB-SMF network element. For example, the first update message may further include one-bit information. When a value of the one-bit information is "0" or "1", updating the first identifier to the profile of the target MB-SMF network element is triggered. After receiving the first update message, the NRF network element adds the first identifier to the profile of the target MB-SMF network element based on the first update message. The first update message may be a network element function update request (Nnrf_NFManagement_NFUpdate).

It may be understood that the NRF network element may add the first identifier to a session identifier range in the profile of the target MB-SMF network element. For example, the profile to which the first identifier is added may be shown in FIG. 6A. In FIG. 6A, the profile to which the first identifier is added includes the session identifier range, and the session identifier range includes the first identifier. The NRF network element may alternatively add the first identifier to the profile of the target MB-SMF network element, but does not add the first identifier to the session identifier range in the profile. For example, the NRF network element stores the first identifier in the profile as a serving MBS session identifier. For example, the profile to which the first identifier is added may be shown in FIG. 6B. In FIG. 6B, the profile to which the first identifier is added includes the session identifier range and the serving MBS session identifier. The serving MBS session identifier is the first identifier, and the session identifier range may also include the first identifier (to be specific, even if the first identifier is included in the session identifier range, the target MB-SMF network element sends the first update message, and stores the first session identifier as the serving MBS session identifier in the profile of the MB-SMF network element in the NRF network element).

Optionally, after S402, if the target MB-SMF network element does not support the first identifier, the first network element sends a second message to the target MB-SMF network element. The second message may trigger the target MB-SMF network element to allocate an MBS session identifier to the first MBS session. For example, the second message is an MBS session creation request (for example, Nmbsmf_ MBSSession_Create Request) message. The second message includes indication information indicating whether an MBS session identifier needs to be allocated, and the indication information indicates that an MBS session identifier needs to be allocated, to trigger the target MB-SMF network element to allocate an MBS session identifier to the first MBS session. In other words, the target MB-SMF network element may allocate a new identifier to the first MBS session, and then the NRF network element may discover the target MB-SMF network element based on the new identifier. For example, the first network element sends the new identifier to the NRF network element, so that the NRF network element can discover the target MB-SMF network element based on the new identifier in a subsequent procedure.

It may be understood that, after receiving the second message, the target MB-SMF network element may send, to the first network element, a second identifier that is of the first MBS session and that is allocated by the target MB-SMF network element. Correspondingly, the first network element receives the second identifier allocated by the target MB-SMF network element. The target MB-SMF network element supports the second identifier. The second identifier may be a TMGI, but the second identifier is different from the first identifier.

Optionally, the first network element sends the second identifier to the AF network element.

It may be understood that, after S402, a first MBS session creation procedure may be performed. For details, refer to descriptions in S5.4 to S5.8. The MB-SMF network element 2 in S5.4 to S5.8 may be replaced with the target MB-SMF network element. Because the target MB-SMF supports the MBS service area, the first MBS session can transmit data to the MBS service area. In other words, the target MB-SMF network element can provide a service for an AF network element corresponding to the first MBS session. The AF corresponding to the first MBS session may be understood as that the first MBS session provides a data transmission service for the AF, to be specific, the AF transmits data by using the first MBS session.

Based on the method shown in FIG. 4, the first network element may receive, from the AF network element, the first identifier of the first MBS session and the information about the MBS service area, and determine the target MB-SMF network element based on the first identifier and the information about the MBS service area. Because the information about the MBS service area is considered when the target MB-SMF network element is determined, the target MB-SMF network element can support the MBS service area, or can serve the MBS service area, so that the target MB-SMF network element can provide a service for the AF network element corresponding to the first MBS session.

It may be understood that actions of the first network element, the NRF network element, the target MB-SMF network element, or the first MB-SMF network element in S401 and S402 or S4021 to S4028 may be performed by the processor 301 in the communication apparatus 30 shown in FIG. 3 by invoking the application program code stored in the memory 303. This is not limited in this embodiment of this application.

It may be understood that, before the method shown in FIG. 4 is performed, the AF network element has obtained the first identifier of the first MBS session. In other words, the first network element determines the target MB-SMF network element only after performing the procedure of allocating an MBS session identifier. In actual application, the first network element may alternatively determine the target MB-SMF network element in the procedure of allocating an MBS session identifier. For details, refer to the method shown in FIG. 7.

FIG. 7 shows another multicast/broadcast communication method according to an embodiment of this application. The multicast/broadcast communication method may include the following steps.

S701: An AF network element sends a fourth request message to a first network element. Correspondingly, the first network element receives the fourth request message from the AF network element.

The communication system 10 shown in FIG. 1 is used as an example. The first network element in S701 may be the first network element 101 in FIG. 1. The 5G broadcast/groupcast architecture shown in FIG. 2 is used as an example. The first network element in S701 may be the NEF network element or the MBSF network element in FIG. 2. The AF network element in S701 may be the AF network element/AS in FIG. 2.

In this embodiment of this application, the fourth request message may request to allocate an identifier of an MBS session. The fourth request message may include information about an MBS service area. The fourth request message may further include a quantity of identifiers of the MBS session that are requested to be allocated. For example, the fourth request message is a TMGI allocation request (for example, Nnef_TMGI_Allocate Request) message. For descriptions of the information about the MBS service area, refer to the descriptions in S4.6. An MBS session may be for transmitting data to the MBS service area.

In a possible design, if the fourth request message does not include the quantity of identifiers of the MBS session that are requested to be allocated, it indicates that the AF network element requests to allocate one identifier.

It may be understood that, when S701 is performed, the MBS session has not been created, in other words, the MBS session is a to-be-created session.

S702: The first network element sends a fifth request message to an NRF network element. Correspondingly, the NRF network element receives the fifth request message from the first network element.

The communication system 10 shown in FIG. 1 is used as an example. The NRF network element in S702 may be the NRF network element 102 in FIG. 1. The 5G broadcast/groupcast architecture shown in FIG. 2 is used as an example. The NRF network element in S702 may be the NRF network element in FIG. 2.

In this embodiment of this application, the fifth request message may request the NRF network element to discover an MB-SMF network element. The fifth request message may be an NF discovery request message. The fifth request message may include the information about the MBS service area.

It may be understood that, after receiving the fifth request message, the NRF network element may discover an MB-SMF network element based on the information about the MBS service area. For example, the NRF network element may discover, in a plurality of MB-SMF network elements registered with the NRF network element, an MB-SMF network element whose service area overlaps the MBS service area. In other words, the MB-SMF network element discovered by the NRF network element supports the MBS service area.

S703: The NRF network element sends a response message of the fifth request message to the first network element. Correspondingly, the first network element receives, from the NRF network element, the response message of the fifth request message.

In this embodiment of this application, the response message of the fifth request message may be a response message of the NF discovery request message. The response message of the fifth request message may include information about a target MB-SMF network element. The target MB-SMF network element supports the MBS service area. The target MB-SMF network element is configured to create the MBS session. It may be understood that there may be one or more target MB-SMF network elements. If there are a plurality of target MB-SMF network elements, the first network element may subsequently select one of the plurality of target MB-SMF network elements as a final target MB-SMF network element.

In this embodiment of this application, the information about the target MB-SMF network element may include an identifier of the target MB-SMF network element and/or an address (for example, an IP address) of the target MB-SMF network element. Optionally, the information about the target MB-SMF network element further includes a session identifier range corresponding to the target MB-SMF network element, and/or information about a service area of the target MB-SMF network element, and/or an MBS service area supported by the target MB-SMF network element. The MBS service area supported by the target MB-SMF network element may include an overlapping area between the service area of the target MB-SMF network element and the MBS service area.

Optionally, after S703, the first network element may send a sixth request message to the target MB-SMF network element. The sixth request message may trigger the target MB-SMF network element to allocate an MBS session identifier to the MBS session. The sixth request message may include the information about the MBS service area. For example, the sixth request message is an Nmbsmf_TMGI_Allocate Request message. The sixth request message includes one-bit information. When a value of the one-bit information is "0" or "1", the target MB-SMF network element is triggered to allocate an MBS session identifier to the MBS session. Subsequently, the NRF network element may discover the target MB-SMF network element based on the allocated identifier.

It may be understood that, after receiving the sixth request message, the target MB-SMF network element may allocate a third identifier to the MBS session based on the sixth request message, and send the third identifier to the first network element. Correspondingly, the first network element receives the third identifier allocated by the target MB-SMF network element. The third identifier may identify the MBS session. The target MB-SMF network element supports the third identifier.

In a possible implementation, the third identifier has an association relationship with the MBS service area. In other words, after allocating the third identifier, the target MB-SMF network element associates the third identifier with the MBS service area.

In an example, the target MB-SMF network element stores a profile. The profile stores the third identifier and the information about the MBS service area corresponding to the third identifier. In other words, the target MB-SMF network element stores, in the profile, the third identifier and the information about the MBS service area corresponding to the third identifier.

In another example, the target MB-SMF network element sends a third update message to the NRF network element. The third update message may trigger the NRF network element to add the association relationship between the third identifier and the MBS service area to a profile of the MB-SMF network element. After receiving the third update message, the NRF network element adds the association relationship to the profile of the MB-SMF network element. For example, the NRF network element stores, in the profile, the third identifier and the information about the MBS service area corresponding to the third identifier.

Optionally, the first network element further sends the third identifier and the information about the MBS service area to the AF network element. For example, the first network element sends an Nnef_TMGI_Allocate Response message to the AF network element, where the message includes the third identifier and the information about the MBS service area. The message further includes expiration time corresponding to the third identifier and the information about the MBS service area.

It may be understood that, after S703, an MBS session creation procedure may be performed. For details, refer to descriptions in S5.4 to S5.8. The MB-SMF network element 2 in S5.4 to S5.8 may be replaced with the target MB-SMF network element. Because the target MB-SMF supports the MBS service area, the MBS session can transmit data to the MBS service area. In other words, the target MB-SMF network element can provide a service for an AF network element corresponding to the MBS session.

Based on the method shown in FIG. 7, the first network element may receive, from the AF network element, the information about the MBS service area, and send the information about the MBS service area to the NRF network element, so that the NRF network element can discover an MB-SMF network element based on the information about the MBS service area. Because the information about the MBS service area is considered when an MB-SMF network element is discovered, the MB-SMF network element discovered by the NRF network element can support the MBS service area, or can serve the MBS service area, so that the MB-SMF network element discovered by the NRF network element can provide a service for the AF network element corresponding to the MBS session.

It may be understood that actions of the first network element, the NRF network element, or the target MB-SMF network element in S701 to S703 may be performed by the processor 301 in the communication apparatus 30 shown in FIG. 3 by invoking the application program code stored in the memory 303. This is not limited in this embodiment of this application.

It may be understood that, in the method shown in FIG. 7, the first network element discovers an MB-SMF network element by using the NRF network element. If the first network element supports caching information about an MB-SMF network element, the first network element may locally discover an MB-SMF network element based on the information about the MBS service area, and does not need to discover an MB-SMF network element by using the NRF network element. A process in which the first network element locally discovers an MB-SMF network element based on the information about the MBS service area is similar to a process in which the NRF network element discovers an MB-SMF network element based on the information about the MBS service area. For details, refer to corresponding descriptions in the method shown in FIG. 7. Details are not described herein again.

Embodiments mentioned above in this application may be combined without a conflict between the solutions. This is not limited.

It may be understood that, in the foregoing embodiments, the method and/or the step implemented by the first network element may be implemented by a component (for example, a chip or a circuit) that can be used in the first network element, the method and/or the step implemented by the NRF network element may be implemented by a component (for example, a chip or a circuit) that can be used in the NRF network element, and the method and/or the step implemented by an MB-SMF network element (for example, the target MB-SMF network element or the first MB-SMF network element) may alternatively be implemented by a component (for example, a chip or a circuit) that can be used in an MB-SMF network element (for example, the target MB-SMF network element or the first MB-SMF network element).

The foregoing mainly describes the solutions provided in embodiments of this application from a perspective of interaction between network elements. Correspondingly, an embodiment of this application further provides a communication apparatus. The communication apparatus may be the first network element in the foregoing method embodiments, or an apparatus including the foregoing first network element, or a component that can be used in the first network element. Alternatively, the communication apparatus may be the NRF network element in the foregoing method embodiments, or an apparatus including the NRF network element, or a component that can be used in the NRF network element. Alternatively, the communication apparatus may be the target MB-SMF network element in the foregoing method embodiments, or an apparatus including the target MB-SMF, or a component that can be used in the target MB-SMF. It may be understood that, to implement the foregoing functions, the first network element, the NRF network element, the target MB-SMF, or the like includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the first network element, the NRF network element, or the target MB-SMF network element may be divided based on the foregoing method examples. For example, the functional modules may be divided based on functions, or at least two functions may be integrated in one processing module. The integrated module may be implemented in a form of hardware, or may be implemented in a form of a software functional module. It may be understood that, in embodiments of this application, division into the modules is an example, and is merely logical function division. Another division manner may be used during actual implementation.

For example, when each functional module is obtained through division in an integrated manner, FIG. 8 is a schematic diagram of a structure of a communication apparatus 80. The communication apparatus 80 includes a transceiver module 801 and a processing module 802. The transceiver module 801 may also be referred to as a transceiver unit, and is configured to perform receiving and sending operations. For example, the transceiver module may be a transceiver circuit, a transceiver machine, a transceiver, or a communication interface. The processing module 802 may also be referred to as a processing unit, and is configured to perform an operation other than the receiving and sending operations, for example, may be a processing circuit or a processor.

In some embodiments, the communication apparatus 80 may further include a storage module (which is not shown in FIG. 8), configured to store program instructions and data.

For example, the communication apparatus 80 is configured to implement a function of the first network element. The communication apparatus 80 is, for example, the first network element in the embodiment shown in FIG. 4 or the embodiment shown in FIG. 5.

The transceiver module 801 receives first information from an application function network element. The first information includes a first identifier of a first MBS session and information about an MBS service area. The first MBS session is for transmitting data to the MBS service area. For example, the transceiver module 801 may be configured to perform S401.

The processing module 802 is configured to determine a target MB-SMF network element based on the first information. The target MB-SMF network element supports the MBS service area, and the target MB-SMF network element is configured to create the first MBS session. For example, the processing module 802 may be configured to perform S402.

In a possible implementation, the processing module 802 is specifically configured to send a first request message to a network repository function network element by using the transceiver module 801, where the first request message is for requesting the network repository function network element to discover an MB-SMF network element, and the first request message includes the first information. The processing module 802 is further specifically configured to receive a first response message from the network repository function network element by using the transceiver module 801, where the first response message includes information about at least one MB-SMF network element, and the at least one MB-SMF network element meets at least one of the following: supporting the MBS service area but not supporting the first identifier, supporting both the MBS service area and the first identifier, or supporting the first identifier but not supporting the MBS service area. The processing module 802 is further specifically configured to determine the target MB-SMF network element based on the information about the at least one MB-SMF network element.

In a possible implementation, the first request message further includes preference information. The preference information triggers preferential discovery of an MB-SMF network element supporting the MBS service area. The at least one MB-SMF network element meets at least one of the following: supporting the MBS service area but not supporting the first identifier, or supporting both the MBS service area and the first identifier.

In a possible implementation, the target MB-SMF network element supports the first identifier.

In a possible implementation, the processing module 802 is specifically configured to send a second request message to the network repository function network element by using the transceiver module 801, where the second request message is for requesting the network repository function network element to discover an MB-SMF network element, and the second request message includes the first identifier. The processing module 802 is further specifically configured to receive a second response message from the network repository function network element by using the transceiver module 801, where the second response message includes information about a first MB-SMF network element, and the first MB-SMF network element supports the first identifier. The processing module 802 is further specifically configured to determine, based on the information about the first MB-SMF network element, that the first MB-SMF network element does not support the MBS service area. The processing module 802 is further specifically configured to send a third request message to the network repository function network element by using the transceiver module 801, where the third request message is for requesting the network repository function network element to discover an MB-SMF network element, and the third request message includes the information about the MBS service area. The processing module 802 is further specifically configured to receive a third response message from the network repository function network element by using the transceiver module 801, where the third response message includes the information about at least one MB-SMF network element, and the at least one MB-SMF network element supports the MBS service area but does not support the first identifier. The processing module 802 is further specifically configured to determine one MB-SMF network element in the at least one MB-SMF network element as the target MB-SMF network element.

In a possible implementation, the target MB-SMF network element does not support the first identifier, and the transceiver module 801 is further configured to send a second message to the target MB-SMF network element, where the second message triggers the target MB-SMF network element to allocate an MBS session identifier to the first MBS session. The transceiver module 801 is further configured to receive a second identifier that is of the first MBS session and that is allocated by the target MB-SMF network element, and the target MB-SMF network element supports the second identifier.

In a possible implementation, the transceiver module 801 is further configured to send a third message to the target MB-SMF network element, where the third message includes the first identifier, and the first identifier is used by the target MB-SMF network element to update the first identifier to a profile of the target MB-SMF network element.

When the communication apparatus 80 is configured to implement the function of the first network device, for other functions that can be implemented by the communication apparatus 80, refer to related descriptions of the embodiment shown in FIG. 4 or the embodiment shown in FIG. 5. Details are not described again.

Alternatively, for example, the communication apparatus 80 is configured to implement a function of the target MB-SMF network element. For example, the communication apparatus 80 is the target MB-SMF network element in the embodiment shown in FIG. 7.

The transceiver module 801 is configured to receive a sixth request message from the first network element. The sixth request message triggers the communication apparatus 80 to allocate an MBS session identifier to an MBS session, and the sixth request message includes the information about the MBS service area.

The processing module 802 is configured to allocate a third identifier to the MBS session based on the sixth request message. The third identifier identifies an MBS session, and the MBS session is for transmitting data to the MBS service area.

The transceiver module 801 is further configured to send the third identifier to the first network element.

In a possible implementation, the communication apparatus 80 stores a profile, and the profile stores the third identifier and the information about the MBS service area corresponding to the third identifier.

In a possible implementation, the transceiver module 801 is further configured to send a third update message to the network repository function network element, where the third update message triggers the network repository function network element to add an association relationship between the third identifier and the MBS service area to the profile of the communication apparatus 80.

In a possible implementation, the first network element is a network exposure function network element, a multicast/broadcast service function network element, or an application function network element.

When the communication apparatus 80 is configured to implement the function of the target MB-SMF network device, for other functions that can be implemented by the communication apparatus 80, refer to related descriptions of the embodiment shown in FIG. 7. Details are not described again.

In a simple embodiment, a person skilled in the art may figure out that the communication apparatus 80 may be in the form shown in FIG. 3. For example, the processor 301 in FIG. 3 may invoke computer-executable instructions stored in the memory 303, to enable the communication apparatus 80 to perform the method in the foregoing method embodiments.

Specifically, functions/implementation processes of the transceiver module 801 and the processing module 802 in FIG. 8 may be implemented by the processor 301 in FIG. 3 invoking the computer-executable instructions stored in the memory 303. Alternatively, the functions/implementation processes of the processing module 802 in FIG. 8 may be implemented by the processor 301 in FIG. 3 invoking the computer-executable instructions stored in the memory 303. The functions/implementation processes of the transceiver module 801 in FIG. 8 may be implemented by the communication interface 304 in FIG. 3.

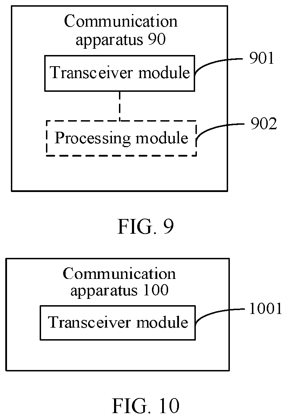

For example, when each functional module is obtained through division in an integrated manner, FIG. 9 is a schematic diagram of a structure of a communication apparatus 90. The communication apparatus 90 includes a transceiver module 901. Optionally, the communication apparatus 90 further includes a processing module 902. The transceiver module 901 may also be referred to as a transceiver unit, and is configured to perform receiving and sending operations. For example, the transceiver module may be a transceiver circuit, a transceiver machine, a transceiver, or a communication interface. The processing module 902 may also be referred to as a processing unit, and is configured to perform an operation other than receiving and sending operations, for example, may be a processing circuit or a processor.

In some embodiments, the communication apparatus 90 may further include a storage module (which is not shown in FIG. 9), configured to store program instructions and data.

For example, the communication apparatus 90 is configured to implement a function of an NRF network element. The communication apparatus 90 is, for example, the NRF network element in the embodiment shown in FIG. 5.

The transceiver module 901 is configured to receive a first request message from a first network element. The first request message is for requesting to discover an MB-SMF network element, the first request message includes first information, and the first information includes a first identifier of a first MBS session and information about an MBS service area. The first MBS session is for transmitting data to the MBS service area. For example, the transceiver module 901 may be configured to perform S4021.

The transceiver module 901 is further configured to send a first response message to the first network element. The first response message includes information about at least one MB-SMF network element. The at least one MB-SMF network element meets at least one of the following: supporting the MBS service area but not supporting the first identifier, supporting both the MBS service area and the first identifier, or supporting the first identifier but not supporting the MBS service area. For example, the transceiver module 901 may be configured to perform S4022.

In a possible implementation, the first request message further includes preference information, and the preference information triggers preferential discovery of an MB-SMF network element supporting the MBS service area. The at least one MB-SMF network element includes an MB-SMF network element supporting the MBS service area but not supporting the first identifier, and an MB-SMF network element supporting both the MBS service area and the first identifier.

In a possible implementation, the transceiver module 901 is further configured to receive a first update message from a target MB-SMF network element, where the target MB-SMF network element is included in the at least one MB-SMF network element, the target MB-SMF network element supports the MBS service area, the target MB-SMF network element is configured to create the first MBS session, and the first update message triggers updating the first identifier to a profile of the target MB-SMF network element. The processing module 902 is configured to add the first identifier to the profile of the target MB-SMF network element based on the first update message.

In a possible implementation, the processing module 902 is specifically configured to store the first identifier in the profile as a serving MBS session identifier.

In a possible implementation, the first network element is a network exposure function network element, a multicast/broadcast service function network element, or an application function network element.

When the communication apparatus 90 is configured to implement the function of the NRF network element, for other functions that can be implemented by the communication apparatus 90, refer to related descriptions of the embodiment shown in FIG. 5. Details are not described again.

In a simple embodiment, a person skilled in the art may figure out that the communication apparatus 90 may be in the form shown in FIG. 3. For example, the processor 301 in FIG. 3 may invoke computer-executable instructions stored in the memory 303, to enable the communication apparatus 90 to perform the method in the foregoing method embodiments.

Specifically, functions/implementation processes of the transceiver module 901 and the processing module 902 in FIG. 9 may be implemented by the processor 301 in FIG. 3 invoking the computer-executable instructions stored in the memory 303. Alternatively, the functions/implementation processes of the processing module 902 in FIG. 9 may be implemented by the processor 301 in FIG. 3 invoking the computer-executable instructions stored in the memory 303. The functions/implementation processes of the transceiver module 901 in FIG. 9 may be implemented by the communication interface 304 in FIG. 3.

For example, when each functional module is obtained through division in an integrated manner, FIG. 10 is a schematic diagram of a structure of a communication apparatus 100. The communication apparatus 100 includes a transceiver module 1001. The transceiver module 1001 may also be referred to as a transceiver unit, and is configured to perform receiving and sending operations. For example, the transceiver module may be a transceiver circuit, a transceiver machine, a transceiver, or a communication interface.

For example, the communication apparatus 100 is configured to implement a function of the target MB-SMF network element. For example, the communication apparatus 100 is the target MB-SMF network element in the embodiment shown in FIG. 4 or the embodiment shown in FIG. 5.

The transceiver module 1001 is configured to receive a third message from a first network element. The third message includes a first identifier of a first MBS session, and the first identifier is used by the communication apparatus 100 to update the first identifier to a profile of the communication apparatus 100.

The transceiver module 1001 is further configured to send a first update message to a network repository function network element. The first update message includes the first identifier, and the first update message triggers storing the first identifier in the profile as a serving MBS session identifier.

In a possible implementation, the first network element is a network exposure function network element, a multicast/broadcast service function network element, or an application function network element.

When the communication apparatus 100 is configured to implement the function of the target MB-SMF network device, for other functions that can be implemented by the communication apparatus 100, refer to related descriptions of the embodiment shown in FIG. 4 or the embodiment shown in FIG. 5. Details are not described again.

Alternatively, for example, the communication apparatus 100 is configured to implement a function of the first network element. The communication apparatus 100 is, for example, the first network element in the embodiment shown in FIG. 7.

The transceiver module 1001 is configured to receive a fourth request message from an application function network element, where the fourth request message is for requesting to allocate an identifier of an MBS session, and the fourth request message includes information about an MBS service area. For example, the transceiver module 1001 is configured to perform S701.

The transceiver module 1001 is further configured to send a fifth request message to the network repository function network element. The fifth request message is for requesting the network repository function network element to discover an MB-SMF network element, and the fifth request message includes the information about the MBS service area. For example, the transceiver module 1001 is further configured to perform S702.

The transceiver module 1001 is further configured to receive, from the network repository function network element, a response message of the fifth request message. The response message includes information about the target MB-SMF network element. The target MB-SMF network element supports the MBS service area, and the target MB-SMF network element is configured to create an MBS session. For example, the transceiver module 1001 is further configured to perform S703.

In a possible implementation, the transceiver module 1001 is further configured to send a sixth request message to the target MB-SMF network element, where the sixth request message triggers the target MB-SMF network element to allocate an MBS session identifier to the MBS session. The transceiver module 1001 is further configured to receive, from the target MB-SMF network element, a third identifier of the MBS session, the target MB-SMF network element supports the third identifier, and the third identifier has an association relationship with the MBS service area.

In a possible implementation, the transceiver module 1001 is further configured to send the third identifier and the information about the MBS service area to an AF network element.

In a possible implementation, the fourth request message is a temporary multicast group identity allocation request message.

When the communication apparatus 100 is configured to implement the function of the first network device, for other functions that can be implemented by the communication apparatus 100, refer to related descriptions of the embodiment shown in FIG. 7. Details are not described again.

In a simple embodiment, a person skilled in the art may figure out that the communication apparatus 100 may be in the form shown in FIG. 3. For example, the processor 301 in FIG. 3 may invoke computer-executable instructions stored in the memory 303, to enable the communication apparatus 100 to perform the method in the foregoing method embodiments.

Specifically, functions/implementation processes of the transceiver module 1001 in FIG. 10 may be implemented by the processor 301 in FIG. 3 invoking the computer-executable instructions stored in the memory 303. Alternatively, the functions/implementation processes of the transceiver module 1001 in FIG. 10 may be implemented by the communication interface 304 in FIG. 3.

It may be understood that one or more of the foregoing modules or units may be implemented by software, hardware, or a combination thereof. When any one of the foregoing modules or units is implemented by software, the software exists in a form of computer program instructions, and is stored in a memory. A processor may be configured to execute the program instructions and implement the foregoing method processes. The processor may be built into a SoC (system-on-a-chip) or an ASIC, or may be an independent semiconductor chip. In addition to cores for executing software instructions to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method processes.

Optionally, an embodiment of this application further provides a chip system. The chip system includes at least one processor and an interface. The at least one processor is coupled to a memory by using the interface. When the at least one processor executes a computer program or instructions in the memory, the method according to any one of the foregoing method embodiments is performed. In a possible implementation, the chip system further includes a memory. Optionally, the chip system may include a chip, or may include a chip and another discrete component. This is not specifically limited in embodiments of this application.

Optionally, an embodiment of this application further provides a computer-readable storage medium. All or a part of processes in the foregoing method embodiments may be completed by a computer program instructing related hardware. The program may be stored in the foregoing computer-readable storage medium. When the program is executed, the processes in the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both the internal storage unit and the external storage device of the communication apparatus. The computer-readable storage medium is configured to store the computer program and other programs and data that are required by the communication apparatus. The computer-readable storage medium may be further configured to temporarily store data that has been output or is to be output.

Optionally, an embodiment of this application further provides a computer program product. All or a part of the processes in the foregoing method embodiments may be completed by a computer program instructing related hardware. The program may be stored in the foregoing computer program product. When the program is executed, the processes in the foregoing method embodiments may be included.

Optionally, an embodiment of this application further provides computer instructions. All or a part of the processes in the foregoing method embodiments may be implemented by the computer instructions instructing related hardware (such as a computer, a processor, an access network device, a mobility management network element, or a session management network element). The computer instructions may be stored in the foregoing computer-readable storage medium or the foregoing computer program product.

Optionally, an embodiment of this application further provides a communication system, including the first network element and the NRF network element in the embodiment shown in FIG. 4 or the embodiment shown in FIG. 5. Optionally, the communication system further includes the target MB-SMF network element in the embodiment shown in FIG. 4 or the embodiment shown in FIG. 5.

Optionally, an embodiment of this application further provides a communication system, including the first network element and the target MB-SMF network element in the embodiment shown in FIG. 7.

The foregoing descriptions about implementations allow a person skilled in the art to clearly understand that, for the purpose of convenient and brief description, division of the foregoing functional modules is merely taken as an example for illustration. In actual application, the foregoing functions can be allocated to different modules and implemented based on a requirement, in other words, an inner structure of an apparatus is divided into different functional modules to implement all or a part of the functions described above.

In several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A multicast/broadcast communication method, wherein the method comprises:
receiving a fourth request message from an application function network element, wherein the fourth request message is for requesting to allocate an identifier of a multicast/broadcast service MBS session, and the fourth request message comprises information about an MBS service area;
sending a fifth request message to a network repository function network element, wherein the fifth request message is for requesting the network repository function network element to discover a multicast/broadcast session management function MB-SMF network element, and the fifth request message comprises the information about the MBS service area; and
receiving, from the network repository function network element, a response message of the fifth request message, wherein the response message comprises information about a target MB-SMF network element, the target MB-SMF network element supports the MBS service area, and the target MB-SMF network element is configured to create the MBS session.

2. The method according to claim 1, wherein the method further comprises:
sending a sixth request message to the target MB-SMF network element, wherein the sixth request message triggers the target MB-SMF network element to allocate an MBS session identifier to the MBS session; and
receiving, from the target MB-SMF network element, a third identifier of the MBS session, wherein the target MB-SMF network element supports the third identifier, and the third identifier has an association relationship with the MBS service area.

3. The method according to claim 2, wherein the method further comprises:
sending the third identifier and the information about the MBS service area to the application function network element.

4. The method according to any one of claims 1 to 3, wherein the fourth request message is a temporary multicast group identity allocation request message.

5. A multicast/broadcast communication method, wherein the method comprises:
receiving a sixth request message from a first network element, wherein the sixth request message triggers a multicast/broadcast session management function MB-SMF network element to allocate an MBS session identifier to a multicast/broadcast service MBS session, and the sixth request message comprises information about an MBS service area;
allocating a third identifier to the MBS session based on the sixth request message, wherein the third identifier identifies the MBS session, and the MBS session is for transmitting data to the MBS service area; and
sending the third identifier to the first network element.

6. The method according to claim 5, wherein the MB-SMF network element stores a profile, and the profile stores the third identifier and the information about the MBS service area corresponding to the third identifier.

7. The method according to claim 5 or 6, wherein the method further comprises:
sending a third update message to a network repository function network element, wherein the third update message triggers the network repository function network element to add an association relationship between the third identifier and the MBS service area to the profile of the MB-SMF network element.

8. The method according to any one of claims 5 to 7, wherein the first network element is a network exposure function network element, a multicast/broadcast service function network element, or an application function network element.

9. A communication apparatus, comprising a transceiver module, wherein
the transceiver module is configured to receive a fourth request message from an application function network element, wherein the fourth request message is for requesting to allocate an identifier of a multicast/broadcast service MBS session, and the fourth request message comprises information about an MBS service area;
the transceiver module is further configured to send a fifth request message to a network repository function network element, wherein the fifth request message is for requesting the network repository function network element to discover a multicast/broadcast session management function MB-SMF network element, and the fifth request message comprises the information about the MBS service area; and
the transceiver module is further configured to receive, from the network repository function network element, a response message of the fifth request message, wherein the response message comprises information about a target MB-SMF network element, the target MB-SMF network element supports the MBS service area, and the target MB-SMF network element is configured to create the MBS session.

10. The communication apparatus according to claim 9, wherein
the transceiver module is further configured to send a sixth request message to the target MB-SMF network element, wherein the sixth request message triggers the target MB-SMF network element to allocate an MBS session identifier to the MBS session; and
receive, from the target MB-SMF network element, a third identifier of the MBS session, wherein the target MB-SMF network element supports the third identifier, and the third identifier has an association relationship with the MBS service area.

11. The communication apparatus according to claim 10, wherein
the transceiver module is further configured to send the third identifier and the information about the MBS service area to the application function network element.

12. The communication apparatus according to any one of claims 9 to 11, wherein the fourth request message is a temporary multicast group identity allocation request message.

13. A communication apparatus, comprising a transceiver module and a processing module, wherein
the transceiver module is configured to receive a sixth request message from a first network element, wherein the sixth request message triggers the communication apparatus to allocate an MBS session identifier to a multicast/broadcast service MBS session, and the sixth request message comprises information about an MBS service area;
the processing module is configured to allocate a third identifier to the MBS session based on the sixth request message, wherein the third identifier identifies the MBS session, and the MBS session is for transmitting data to the MBS service area; and
the transceiver module is further configured to send the third identifier to the first network element.

14. The communication apparatus according to claim 13, wherein the communication apparatus stores a profile, and the profile stores the third identifier and the information about the MBS service area corresponding to the third identifier.

15. The communication apparatus according to claim 13 or 14, wherein
the transceiver module is further configured to send a third update message to a network repository function network element, wherein the third update message triggers the network repository function network element to add an association relationship between the third identifier and the MBS service area to the profile of the communication apparatus.

16. The communication apparatus according to any one of claims 13 to 15, wherein the first network element is a network exposure function network element, a multicast/broadcast service function network element, or an application function network element.

17. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 4 or the method according to any one of claims 5 to 8.

18. A computer-readable storage medium, wherein the computer-readable storage medium stores a computer program or instructions; and when the computer program or the instructions are executed, a computer is enabled to perform the method according to any one of claims 1 to 4 or the method according to any one of claims 5 to 8.

19. A communication system, comprising: the apparatus according to any one of claims 9 to 12, and the apparatus according to any one of claims 13 to 16.
